# EUROPEAN PATENT APPLICATION

(11) **EP 1 686 441 A1**
(43) Date of publication of application: **02.08.2006**
(21) Application number: 06001369.5
(22) Date of filing: 23.01.2006
(51) Int. Cl.: G05B 19/418

(54) **System, methods and apparatus for complex behaviors of collectives of intelligent mobile software agents**

(30) Priority: 21.01.2005 US 646052 P
(71) Applicant: Solomon, Neal E., Oakland, CA 94620 (US)
(72) Inventor: Solomon, Neal E., Oakland, CA 94620 (US)
(74) Representative: Derry, Paul Stefan

(57) **Abstract**

A system, methods and apparatus are described involving the self-organizing dynamics of networks of distributed computers. The system uses intelligent mobile software agents in a multi-agent system to perform numerous functions, including search, analysis, collaboration, negotiation, decision making and structural transformation. Data are continuously input, analyzed, organized, reorganized, used and output for specific commercial and industrial applications. The system uses combinations of AI techniques, including evolutionary computation, genetic programming and evolving artificial neural networks; consequently, the system learns, anticipates and adapts. The numerous categories of applications of the system include optimizing network dynamics, collective robotics systems, automated commercial systems and molecular modeling systems. Given the application of complexity theory and modal and temporal logics to self-organizing dynamic networks, a novel model of intelligent systems is presented.

## Description

### CROSS-REFERENCES TO RELATED APPLICATIONS

The present application claims the benefit of priority under 35 U.S.C. § 119 from U.S. Provisional Patent Application Serial No. US 60/646,052, filed on January 21, 2005, the disclosures of which are hereby incorporated by reference in their entirety for all purposes.

### FIELD OF THE INVENTION

The present invention is concerned with collective behavior of artificial entities in distributed computer systems, ergodic theory, dynamical systems, modal and temporal logics, evolutionary game theory, computer modeling, descriptive phenomenology, temporal geometries, strategic theory and the theory of action. In addition, the present invention deals with artificial intelligence techniques, including evolutionary computation, artificial neural networks and probabilistic simulations as well as with combinatorial optimization of hybrid mathematical and computational techniques. The present invention is applicable to computational, engineering, mechanical and aeronautical systems, including complex distributed systems.

### BACKGROUND OF THE INVENTION

Intelligent Mobile Software Agents (IMSAs) are complex autonomous computer software programs that operate in a multi-agent system (MAS). While there are various main models of software agents in multi-agent systems, the present system discloses novel approaches to the dynamic process of active IMSA self-organization to solve problems or achieve goals. When linked to particular functional applications, such as dynamic distributed databases, collective robotic systems, bioinformatics systems, enterprise resource management systems and dynamic commercial systems, the present system provides a powerful advance in the art.

There are several categories of art in which prior attempts have been made to develop multi-agent systems, including software agent systems, game theory, neurobiology, modal logic and ethology. The majority of this prior art lies in the domain of pure theoretical research. Consequently, the present invention generally seeks to apply these research concepts to specific computational and engineering systems for practical utility.

Although there is relatively nominal prior art on software agents, prior multi-agent systems include those described by Knapik and Johnson (1998), Ferber (1999) and Woolbridge (2002). These systems represent heuristic attempts to model cooperative agent behaviors by using applications of essential artificial intelligence techniques such as genetic algorithms; however, these multi-agent systems generally lack competitive game theoretic capabilities, complex computer simulation and decision capabilities and active self-organization capabilities which would render them applicable to sophisticated collective robotics systems, automated commercial systems or automated enterprise resource management systems.

Game theoretic modeling of agent behavior has been developed by Von Neumann and Morgenstern in their pioneering work on the theory of games and economic behavior. Schelling has also developed research on game theoretic behaviors of cooperative and competitive multi-agent interactions. More recent work, by Axelrod (1997) and Gintis (2000), involves evolutionary modeling of group behaviors. These prior game theoretic models and strategic theories have been useful in modeling economic and social behavior systems but have not involved significant systems of autonomous, or self-organizing, multi-agent collectives. Prior patents have been mainly restricted mainly to novel auction techniques that reflect a small part of the overall problem of developing a complex system for agency behaviors.

Recent work by IBM has explored the development of self-regulating networks for system repair by emulating autonomic biological systems such as the human immune system, but this research has not been more fully extended to the self-organization of multi-agent system behaviors for multiple applications such as collective robotics or automated commercial systems.

Biological researchers in such diverse fields as ethology (the theory of instinctive animal behavior) and neurobiology have sought to advance theories of system behavior involving adaptation to a changing environment, but none have advanced a novel computational system capable of self-organizational behaviors.

Researchers from the Santa Fe Institute (SFI) have also attempted to develop complex models of self-organizing behaviors by looking to economics (with the swarm computer model) and biological systems (namely, population dynamics and neuro-dynamics) but have not constructed an active system for self-organization. Like others, SFI researchers have noticed analogies from nature but have not built a dynamic system that emulates the complexity of natural systems.

The CHORO CHRONOS project, from a consortium of European nations seeking to develop temporal databases, is an attempt to develop a mechanism to organize the dynamics of complex systems, though it lacks the explication of functional dynamics required for a self-organizing system of collective agent behaviors.

In addition, the work of van Benthem in temporal logic demonstrates the theoretical use of modal logic to organize future possible pathways in game theoretic systems. However, this modal logic approach is not adaptive and interactive and does not account for the emergent behavior of decentralized collectives of agents in a self-organizing system.

Moreover, these systems are all typically static in nature. Once they are programmed, data is input and output within a preset organizational structure. These models cannot be applied to large or complex systems in order to solve dynamic problems in an active and uncertain changing environment.

Solomon has developed a complex spatio-temporal database management system (U.S. Patent Application Serial No. 11/040945) for integration and operation of IMSAs in self-organizing networks and a mobile hybrid software router (U.S. Patent Application Serial No. 11/227907) for use by IMSAs to combine novel computational and mathematical techniques, such as evolutionary computation, artificial neural networks and probabilistic techniques, to accomplish self-organizing functionalities. The distributed transformational spatio-temporal object relational (T-STOR) databases and the mobile hybrid software router provide key links that enable the truly autonomous functionality of self-organizing collectives of multi-agent systems.

What is needed is a complex dynamic MAS model that is adaptable, scalable and capable of evolution and reorganization. As computer systems become linked in the next generation, this model of distributed computer architecture will behave like an organic system in nature. Whereas there have been numerous advances on small parts of computer systems, there has been relatively little progress involving the management, control, automation and synthesis of complex aspects of very large-scale dynamic systems. The present system fills this important gap.

### BRIEF SUMMARY OF THE INVENTION

Embodiments of the present invention provide a system that automates the self-organization of collectives of computational entities. One variant of the invention provides a multi-agent system architecture with a plurality of interconnected system layers, including structural components, analytical functions, active functions and functional applications. Specifically, these system layers consist of a distributed computer and communications network of multi-functional IMSAs in a multi-agent system. In additional layers, IMSA analytical methods and group learning processes are organized. In further layers, active IMSA simulation modeling and group scenario generation and decision-making processes are organized. IMSA cooperation for aggregation and re-aggregation processes is organized on a further layer. IMSA inter-team rivalry and coalition formation and evolution are organized in an additional layer. The combination of these complex processes allows active network plasticity and automated programming functionality of later layers. Finally, functional applications are at the final layer.

### BRIEF DESCRIPTION OF THE DRAWINGS

Fig. 1 is a diagram of system layers.
Fig. 2 is a diagram illustrating a multi-agent system.
Fig. 3 is a list specifying the specific functions of IMSAs.
Fig. 4 is a diagram showing the switching roles between main IMSA functions.
Fig. 5 is a diagram showing an IMSA communication model.
Fig. 6 is a diagram illustrating the training procedure of an IMSA.
Fig. 7 is a diagram showing the accumulation of multiple functions in an IMSA collective for a specific mission.
Fig. 8 is a diagram showing distinctive functional combinations of IMSAs interacting in a collective.
Fig. 9 is a flow chart showing a problem-finding procedure for an IMSA.
Fig. 10 is a flow chart showing the problem-based solutions of an IMSA.
Fig. 11 is a flow chart showing the application of Bayesian analysis applied to the accumulated experience of an IMSA.
Fig, 12 is a flow chart showing the application of a mobile hybrid software router to an IMSA.
Fig. 13 is a flow chart showing the process of IMSA collective information sharing and analysis.
Fig. 14 is a flow chart of a Just-in-Time IMSA learning process with groups of IMSAs.
Fig. 15 is a flow chart illustrating the social aspects of Bayesian analysis applied to a group of IMSAs.
Fig. 16 is a flow chart showing IMSA collective hybrid social learning.
Fig. 17 is a flow chart illustrating mission-specific IMSA cooperation.
Fig. 18 is a flow chart of IMSA collective schedule formation and synchronization.
Fig. 19 is a flow chart showing experimentation of IMSA strategies using a simulation-testing process.
Fig. 20 is a flow chart showing the active use of IMSA simulations to represent environmental data, feedback and collective behavior adaptation.
Fig. 21 is a diagram showing the generation of counterfactual scenarios by IMSA groups.
Fig. 22 is a diagram showing the prediction of external actions by IMSA groups.
Fig. 23 is a flow chart showing the anticipation process of dynamic environmental action by IMSA collectives.
Fig. 24 is a flow chart showing the planning for unexpected actions by IMSA groups using probability analysis.
Fig. 25 is a diagram showing the generation of solution options by IMSA groups to problems.
Fig. 26 is a flow chart showing the process of ranking (and re-ranking) scenarios by IMSA groups.
Fig. 27 is a flow chart showing the scenario selection criteria by IMSA groups.
Fig. 28 is a diagram showing the application of majority rules in the scenario selection process by IMSA groups.
Fig. 29 is a flow chart showing the process of evolving criterion for scenario selection by IMSA groups.
Fig. 30 is a diagram showing the cooperation of IMSA groups.
Fig. 31 is a diagram showing a reaggregation process of IMSA groups.
Fig. 32 is a diagram illustrating the competition between teams of IMSAs.
Fig. 33 is a diagram showing the emergence of IMSA coalitions.
Fig. 34 is a flow chart showing the selection of a best strategy by a team of IMSAs.
Fig. 35 is a flow chart showing the multilateral and multivariate negotiation process within a cooperating group of IMSAs.
Fig. 36 is a flow chart showing the multilateral and multivariate negotiation process between two competing teams of IMSAs.
Fig. 37 is a flow chart showing the argumentation process within a team of IMSAs.
Fig. 38 is a flow chart showing IMSA signaling and the disguising of IMSA signals.
Fig. 39 is a diagram showing the co-evolution of IMSA team strategies aligned with adaptation to a changing environment.
Fig. 40 is a diagram showing the evolution and transformation of coalitions in a dynamic environment.
Fig. 41 is a diagram showing the process of plasticity in the rewiring of a network of IMSA groups.
Fig. 42 is a flow chart showing semi-automated programming by IMSA groups.
Fig. 43 is a flow chart showing problem-based automatic computing for network optimization by IMSA groups.
Fig. 44 is a flow chart showing automated problem solving by IMSA groups.
Fig. 45 is a flow chart illustrating the process of autonomic computing in the self-regulating network of IMSA collectives.
Fig. 46 is a diagram showing the application of IMSA collective behaviors to a transformational spatio-temporal object relational (T-STOR) dbms.
Fig. 47 is a diagram showing the application of IMSA collective behaviors to a dynamic distributed network.
Fig. 48 is a diagram showing the application of IMSA collective behaviors to a commercial system for supply chain management.
Fig. 49 is a diagram showing the application of IMSA collective behaviors to collective robotics systems.
Fig. 50 is a flow chart showing the application of IMSA collective behaviors to a bioinformatics system.
Fig. 51 is a diagram showing the application of IMSA collective behaviors to a global enterprise resource management system.
Fig. 52 is a chart of dynamical system phases matched to unique combinations of mathematical branches.
Fig. 53 is a chart illustrating a unified philosophical framework for dynamic systems.
Fig. 54 is a chart showing complex dynamic system examples and their corresponding representational domains.
Fig. 55 is a flow chart showing collective temporal logic.
Fig. 56 is a flow chart showing temporal algebraic geometry.
Fig. 57 is a chart identifying the phase transitions of different temporal logics.
Fig. 58 is a flow chart of individual choices in temporal pathways.
Fig. 59 is a flow chart of bipartisan U.S. presidential eventualities.

### DETAILED DESCRIPTION OF THE INVENTION

### Intelligent Mobile Software Agents

The main methods of inputting, ordering, searching, fetching and outputting data sets in a dynamic distributed computer system are utilized by intelligent mobile software agents (IMSAs). IMSAs are sophisticated software programs that can adapt, learn, generate or terminate code, move from machine to machine, and perform various functions. IMSAs include search agents, analytical agents for data mining and pattern recognition, negotiation agents, collaboration agents and decision-making agents. IMSAs may use game theoretic modeling, simulations and scenarios in order to perform a function or activate an application. The combination of multiple IMSAs in a dynamic distributed computer system constitutes a multi-agent system (MAS). Teams of agents have specialized (and multi-specialized) functions in the MAS of a dynamic distributed computer system. The present system is characterized by a range of main operations and processes of the dynamic distributed computer system MAS.

One main category of IMSA collective operation involves cooperation. In this model, IMSA collectives aggregate into common interest groups for specific missions. In some cases, the IMSAs may be specialized in functionality so that the combination of unique teams produces novel results.

Another main category of IMSA collective behavior involves competition. In this model, IMSA collectives negotiate by presenting arguments that are ranked and that change with changing circumstances.

A combination of cooperating and competing models occurs when teams of cooperating IMSAs compete with each other. In this sense, the competing teams emulate business operations in the economy.

IMSAs are capable of learning and prediction. IMSAs generate probabilistic scenarios by employing fuzzy logic and artificial intelligence techniques. IMSAs anticipate change in order to optimize system performance; thus potential future data sets are anticipated by analysis of past data sets. Many of these complex data processes are time sensitive. For instance, recent storage may be organized for easier early retrieval, while older data sets are reordered with less priority. Analysis of environmental changes in recent data sets generates model scenarios that involve anticipatory processes based on learning from and projecting trends.

### Prediction, Problem-Solving and Scenarios

One of the main challenges in developing automated dynamic self-organizing systems is the need to design adaptive and effective processes that anticipate behaviors. The ability to anticipate behaviors or patterns in a system depends upon the development of predictive capabilities. Although predictions have constraints, the artificial computer systems field can overcome these constraints by borrowing from the field of econometrics and adopting designs based on Bayesian reasoning and other methods to predict and anticipate various scenarios within temporal limits. The present system contains methods for dealing with the most recent data flows and data analysis to inform scenario generation and selection, based on the use of predictions and expectations derived from the analysis of trends.

In some ways, the challenge for a complex dynamic system is one of discerning how to solve problems. For every set of problems, a set of solutions is proposed and tested in real time. Prior patterns of problem solving are presented in order to assess the optimal solution to a new set of facts. Solution option scenarios are anticipated by past problem-solving sequences. Anomalies are detected as limits in past solutions, multivariate analyses are performed on the problem, and a new set of solution options is generated and evaluated by combining possible solutions. Problem solving is performed on the fly in real time with limited information. After a pattern of problems is recognized and solution options are offered, the system will anticipate changes in the environment and generate simulated scenarios for optimal solutions to future problems. The analysis of trends and the generation and evaluation of scenarios suggest that the system is capable of learning and adapting to the uncertainty of ever changing environments. These sorts of models have been applied to securities markets but have application to a much broader range of categories.

The application of prediction analysis and scenario generation and selection processes relies on principles of induction and learning. Consequently, the present system incorporates these processes. Artificial intelligence methods and techniques, including evolutionary computation and artificial neural networking, are possible because generations of programs have been trained to learn. Inductive inference represents a way to learn from instances in the past, while deductive inference stems from an axiomatic set of rules (and meta-rules) within a finite systemic range of actions. For the most part, inductive inference is the dominant learning model in complex adaptive dynamic self-organizing systems.

The ability of an adaptive system to learn depends on a number of factors, including the environmental inputs, the analysis of patterns and trends, the development of experimental protocols, the assessment and matching of potential solutions to real problems, the continual readjustment process through periods of turbulence, the anticipation of problems and anomalies, and the generation, evaluation and selection of simulated scenarios and solutions.

### Modal Logic, Temporal Logic and Temporal Geometry

Modal logic and temporal logic deal with "possible worlds" and counterfactuals. They ask the question "What if" something happens differently. Historical events are contingent on specific prior events occurring, so modal logic asks, "what is the realm of these possibilities?" An example of the use of modal logic may be observed in economic history in which specific variables can be changed to supply a different outcome.

The use of modal, or temporal, logic is essential to understanding the implications of alternative scenarios in possible actions in which specific behaviors interact with an uncertain and active environment. The use of temporal logic is both *dynamic,* that is, interactive and adaptive, and *collective* in the sense that it must deal with a realm of possible choices and optimal solutions in the organization of a set of scenarios. Integral temporal logic analyzes the history of events to trace the variables to a source period; use of this analytical tool is important in projection of key possible scenarios for collective action and environmental interaction. Temporal logic provides a conceptual mechanism for sorting combinations of possible courses of actions in large collectives of IMSAs.

When the system is applied to extensible objects in space, such as a collective robotic system, the present invention uses temporal geometries and temporal topologies to plot and select possible scenarios that are chosen as an optimum solution to a problem without necessarily converging upon space occupied by another entity.

One of the key features of the present system's application of temporal logic to a group of IMSAs is the pruning and narrowing of possibilities for future actions using probabilistic assessments, predictions and anticipations based on past experiences. Multi-manifold possible worlds are limited in order to achieve the most effectual solution among options. In another sense, the system analyzes variable time granularities in order to optimize the generation and selection of potential scenarios for future action. This procedure is essential to organizing the compatibility of groups of IMSAs with dynamic distributed computer networks for the processing of automated real-time environmental interaction.

### System Architectural Self-Organization and Automatic Programming: Implementing AI

Because these systems are complex and dynamic, there is no equilibrium within them. Rather than simply passively analyzing and assessing data sets, the present system is active. It initiates actions and changes the structure of the system itself in order to accommodate these changes. In this sense, the present system is characterized by plasticity within a dynamic architecture in much the same way that the human brain constantly rewires itself based on various threshold inputs and activities. While the system constantly adapts itself to its changing environment and rewires itself, it is also a distributed network. Accordingly, data streams flow between all active nodes in the system. Activity hubs emerge and decline. These data flows inform, and are consequently rerouted by, the restructuration of the system.

In such a system, the network's computers themselves behave like switches in a giant distributed system. The benefit of this system's dynamic reconfigurable unified artificial adaptive network is that as demand rapidly changes, virtual intelligent hubs are created, as needed. In this sense, the system self-organizes and suggests a sort of unified field theory of dynamic distributed computation systems.

This system relies on a new generation of automatic programming. The distributed computer network contains software agents that control and organize the broader network, with IMSAs that are capable of identifying and assessing problems and generating, evaluating and selecting solutions, all by generating program code autonomously.

The present system is designed to be an artificial distributed, adaptive, self-organizing, auto-programming computer system that, like genetic material, performs various complex functions. In fact, it is a system within a system because it employs a MAS within the distributed computer network. Such a system is not only multi-tasking, but adaptive as well, because inputs are evaluated and solutions generated to solve problems constantly presented by a demanding and changing environment. Finally, the system continually reconfigures its architecture in order to optimize its solutions. The system uses AI techniques and methods, including evolutionary computation, artificial neural networks, Bayesian reasoning, probabilistic simulations and fuzzy logic, in order to meet various challenges, from analysis of problems to the generation and selection of simulated scenario options.

### Combination of IMSAs with Hybrid Software Router

IMSAs use complex program code in their operation. In order to employ the most useful AI techniques to solve complex problems on the fly at key times, IMSAs use a hybrid software router. The hybrid software router identifies and combines the appropriate artificial intelligence (including evolutionary computation, genetic algorithms, artificial neural networks, fuzzy logic or probabilistic simulations) techniques and routes the proper hybrid techniques to the best use in real time. The hybrid software router is integrated into the program code of the IMSA for optimum performance.

### Combination of IMSAs with Dynamic Adaptive Spatio-Temporal Databases

Though IMSAs are useful in numerous applications, they operate within complex distributed computer systems. IMSAs operate in a MAS that is integrated into a network of computer hardware and software. The hardware may be microprocessors, application specific integrated circuits (ASICs) or continuously programmable field programmable gate arrays (CP-FPGAs) that behave as evolvable hardware with characteristics of microprocessors and ASICS. The software may be comprised of, and executed in, various computer languages. One key software component is the database structure which is seen as a major resource that integrates with a MAS. Since the overall system within which the IMSAs operate is structured as a computer network, the databases are distributed and decentralized.

When combined with distributed transformational spatio-temporal object relational (T-STOR) databases, IMSAs are provided with an important symbiotic relationship of functionality, with the IMSAs operating as the mobile software code and the databases operating as the active storage facilities for data objects. The T-STOR databases continually transform in order to maximize efficiencies while processing large amounts of data inputs and outputs so as to adapt complex functions in real time. The IMSAs perform complex functions by using cooperating and competing MAS processes to collect, evaluate and analyze data, make decisions about specific actions and perform specific functions in an evolving environment by continuously interacting with and integrating into T-STOR databases. Distributed T-STOR databases allow for adaptive and dynamic behaviors and are an important mechanism for integration with a self-organizing MAS.

The present invention evolved out of research in complex self-organizing systems and work in T-STOR databases.

### Linkages

One of the key aspects of the system is that it links subsystems. In this sense, the system is a "metasystem" that controls various networks. The scope of this metasystem is broad. It is able to link computer networks from the following categories: commerce (commercial hubs, demand-based negotiation and transactions and supply chain management), financial networks, traffic routing, information organization management, demand-based learning, data mining and analysis, (mobile) sensor networks, simulation modeling, collective robotics, wireless mobile communications, automated decision making and adaptive computer systems.

These complex systems share two main attributes. First, they are all adaptive dynamic systems that use self-organization of data inputs that respond to changing and unpredictable environments. Second, these networks can be linked into a single, unified organic metasystem.

The limits of static computer networks make it necessary to posit a more realistic system that emulates the dynamism and unpredictability of complex systems. These advanced systems require novel learning mechanisms that adapt and optimize their evolutionary development paths. The present system model satisfies the requirements of an evolutionary dynamic self-organizing and adaptive network.

The present system describes connections between software and hardware on the one hand, and middleware and its specific applications on the other.

### Problems that the System Solves

The system provides solutions to a number of problematical questions. These questions are classed into general problems and optimization problems. The general problems include:
How can a single IMSA find and solve problems?
What analytical techniques are used by IMSAs to solve problems?
How can a single IMSA apply Bayesian theory for learning?
How can a MAS structure collective analysis?
How can a MAS organize social learning for Just-in-Time behaviors?
How can IMSAs be organized to cooperate on a specific mission?
How can IMSAs be organized for initial aggregation?
How can IMSAs be organized for reaggregation processes?
How can competitions be organized between teams of IMSAs?
How can teams of IMSAs organize their best strategies?
How can IMSAs negotiate with each other?
How can IMSA team strategies co-evolve?
How can IMSAs use simulations?
How can IMSA simulations be tested?
How can IMSAs generate varied scenarios?
How do IMSAs anticipate dynamic action in an environment?
How are databases used in dynamic interaction within IMSAs?
How are IMSA scenarios ranked?
How are IMSA scenario solution options generated?
How are IMSA functions organized?
How are IMSA communications organized?
How do IMSAs switch roles?
How are IMSAs trained?
How do IMSAs accumulate functions?
How do IMSAs organize functional combinations?
How do IMSAs select scenarios for decisions and actions?
How do IMSA collectives organize problem-solution auto-programming for network optimization?
How do IMSAs organize semi-automated programming?
How do IMSAs rewire the network for plasticity?
How is modal logic used by IMSA collectives?
How is temporal geometry used by IMSA collectives in extensible systems?
How are networks of IMSAs self-regulating for autonomic computing?
How can a dynamic MAS be applied to e-commerce for supply chain management?
How can a dynamic MAS be applied to collective robotics, primarily for factory production, traffic coordination, surveillance, automated weaponry and hazard management systems?
How can a dynamic MAS be used in a distributed T-STOR dbms?
How can a dynamic MAS be applied to a bioinformatics modeling system?
How can a dynamic MAS be applied to a global enterprise resource management system?

The optimization problems include:
How do IMSAs automatically generate optimizing algorithms?
How do IMSAs continue to optimize multi-phasal processes?
How do IMSAs constantly learn?
How do IMSAs solve combinatorial optimization problems?
How do IMSAs efficiently reroute data flows in dynamic networks?
How do IMSAs provide a solution to problems of winner-determination?
How do IMSAs maximize efficiency?
How do IMSAs optimize multi-tasking functions?
How do IMSA groups solve problems in a coordinated team?
How do IMSAs in a group align strategies to solve problems or achieve goals?

### Analogies with biological and other systems

The present invention is designed as a novel self-organizing system that adapts to environmental interactions in real time. By using anticipatory behaviors, learning, and automated programming features, the interaction processes are maximized for mission critical applications.

Analogies to this complex metasystem may be found in both economic and biological behaviors. In economics, the structure of markets constantly evolves, driven by the behavior of self-interested agents. Inter-agent rivalry forces new market configurations. These intra-system processes reshape the architecture of the markets themselves, a transformation that in turn affects the competitive organization and so on.

In the context of biological systems, several analogies are pertinent to the present system. First, evolutionary behavior resembles the competitive configuration of economic behavior. Groups of individuals compete for limited resources as whole species rise and fall according to environmental circumstances. These complex processes have led to such diverse phenomena as collective behavior in groups of animals (herding, schooling, flocking and swarming) and the organization of antibodies in the bloodstream to fight off viruses.

The second analogy between biology and complex self-organizing systems involves genetics. Refined over millions of years, genetic material is known to be an amazingly complex self-organizing system. Specific genes are activated at specific times to perform functions, for instance, to generate a protein that in turn will activate other genes to perform another function within a limited time. This complex dance of genetic material, and its mutations over time, allows living entities to survive in and adapt to hostile, uncertain and changing environments.

In addition, the present active dynamic multi-agent system emulates other aspects of specific biological systems including development of complex functional proteomic interactions and neurological interactive processes and the evolution of the human immune system.

A particularly cogent illustration of a complex self-organizing system is the human immune system. Our immune systems, when healthy, use proteins and antibodies which identify, mark, attack (in waves) and remove pathogens. In effect, these synchronized processes utilize specialized agents for self-regulating autonomic behaviors. In general, the human immune system functions in equilibrium with its environment, but the immune system can be suppressed or the environment can present increased numbers of pathogens to overwhelm the immune system. Pathogenic disease is a key cause of death, so effective operation of the immune system is crucial to survival. The immune system embodies a complex system comprised of numerous agents (proteins and antibodies) that has evolved in a constant war with its environment in order to survive.

One way to emulate the functional dynamics of biological (or economic) systems is to use computer simulations or cellular automata (CA) simulations. CA makes use of nearest-neighbor contacts to communicate change in the overall system, much like micro-economic behaviors create macro-economic effects. However, the present system seeks to go beyond these simulations by introducing feedback and active adaptation to decentralized functional dynamics of specific applications.

The challenge of organizing a system to transcend the limits of cellular automata systems (which typically have closest-neighbor communications applicable to swarming or flocking natural behaviors) involves developing methods of coordinating multiple agents with ubiquitous network communications. Multi-agent systems which use algorithms that organize simulation scenarios, learning and decision-making processes that go beyond spatially or temporally local algorithms may dramatically increase the functionality of self-organizing dynamic systems. These CA-transcendent models of complex behavior restructure the dynamics of groups in decentralized self-organizing matrices. Since many other MAS models omit methods of such collective dynamics, the present invention is an advance.

### Innovations of the Invention

The innovations of the present invention number in the dozens. Regarding IMSAs as entities themselves, these innovations include the ability of IMSAs to switch roles between main functions, accumulate functionality for specific missions in IMSA collectives, and enable distinctive functional IMSA combinations. Regarding analytical learning processes, the present invention represents innovations in problem finding approaches for IMSA analytical methods, sharing of information and collective analysis between IMSAs, the Just-in-Time learning capacity of IMSAs, social aspects of Bayesian theory applied to IMSA collectives and the hybrid social learning capabilities of IMSAs. Regarding the aggregation of IMSA collectives, the present invention reveals novel approaches to schedule formation and synchronization, particularly in dynamic time-table modeling, for IMSA collectives, as well as novel reaggregation approaches of IMSA collectives in varied discrete mission functions. Coalitions of IMSA collectives constantly reorganize contingent on the functional and problem-solving capabilities.

Regarding game theoretic simulations, the present invention advances the art substantially by teaching multilateral and multivariate negotiation processes within IMSA collectives; additionally, the invention illuminates argumentation and objection procedures in negotiation and decision-making processes of IMSA collectives, the adaptation and co-evolutionary strategies of game theoretic modeling for and by IMSA collectives, organization of the experimentation process by IMSA collectives and the assessment of environmental feedback and adaptation of IMSA collectives using simulations. The present system also reveals innovations in: organizing mechanisms for the prediction of external actions by IMSA collectives using scenario analysis; establishing procedures for anticipating dynamic environmental action using IMSA collectives employing techniques for scenario analysis, scenario solution option generation and scenario-ranking processes; and evolving criteria for scenario selection and the selection of a best available strategy using simulations and scenario-analysis processes by majorities of IMSA collectives.

The present invention uses counterfactual analysis derived from temporal logic research in collective scenario analysis. This research combines elements from philosophy, mathematics, logic and economics research to apply to dynamic computational and engineering systems. The temporal aspects in the present system that are integrated into dynamic distributed database management systems and that functionally allow collective behavior are novel as well.

The present invention illustrates innovations in advanced computation by developing problem-based automated computing for network optimization using IMSA collectives, plasticity processes using automated network rewiring techniques and self-regulating networks using IMSA collective behaviors.

Overall, the application of the present invention to numerous complex system categories is novel and useful. These applications include automated commercial systems for supply chain management optimization, collective robotics systems (for dozens of specific applications), genetics and proteomics modeling systems, global enterprise resource management systems, communications network optimization, distributed computer and distributed database management systems, dynamic mobile computer or communications network systems and interactive personalized education systems.

### Advantages of the System

The present invention has numerous advantages over earlier models. The system optimizes the adaptive self-organizing operations of dynamic networks. Though it is not meant to be a complete list, the present system is applicable to a broad range of applications, from mobile computing network optimization to collective robotics and from dynamic commercial systems to remote sensing networks.

The present invention allows dramatic increases in productivity in network optimization. The present system goes beyond prior systems by providing combinations of techniques and processes to accomplish automated computational problem solving. While other MASes are static and pre-programmed, the present system is designed for adaptation, co-evolution, collective learning and problem solving in changing environments. Because of the invention's applications to various complex functional systems, the present system is modular.

References to the remaining portions of the specification, including the drawings and claims, will explicate other features and advantages of the present invention. Further features and advantages of the present invention, as well as the structure and operation of various embodiments of the invention, are described in detail below with respect to accompanying drawings.

### System Components

IMSAs are categorized into specific types according to specialized and multi-functional attributes. IMSAs utilize analytical methods, both individually and collectively. Similarly, IMSAs use learning methods, both individually and collectively.

One of the main functional capabilities of the present system is its performance of aggregation and re-aggregation processes using cooperative computational methods. In addition, the system uses game theoretical modeling of competitive IMSA collectives to perform functions. IMSAs also use simulation modeling. Scenarios are generated by IMSAs via modeling techniques, and collective decision-making processes organize to select a best scenario.

One outgrowth of combining these complex and novel processes is the organization of automatic programming of computational systems using IMSA collectives. The auto-programming features of the present invention allow IMSA collectives to rewire networks in real time to adapt to changing environments, thus engendering network plasticity capabilities.

The following detailed description of the drawings is divided into several parts that explain: (1) the system structure, which consists of (a) the apparatus of a distributed computer and communications network, (b) IMSAs in a multi-agent system, (c) specialized and multi-functional IMSAs, and individual IMSA analytical methods, (2) the group analytical functions, which consist of (a) IMSA collective learning processes, (b) IMSA collective simulation-modeling processes, (c) IMSA group scenario generation processes and (d) IMSA group decision-making processes, (3) the active functions, which consist of (a) cooperative IMSA aggregation and reaggregation processes, (b) IMSA team competition and coalition formation, (c) active network plasticity and (d) auto-programming in a multi-agent system with IMSA collectives and; (4) functional applications, including (a) automated commerce, (b) collective robotics, (c) enterprise resource management, (d) bioinformatics and (e) communications network systems.

### General Architecture and Dynamics

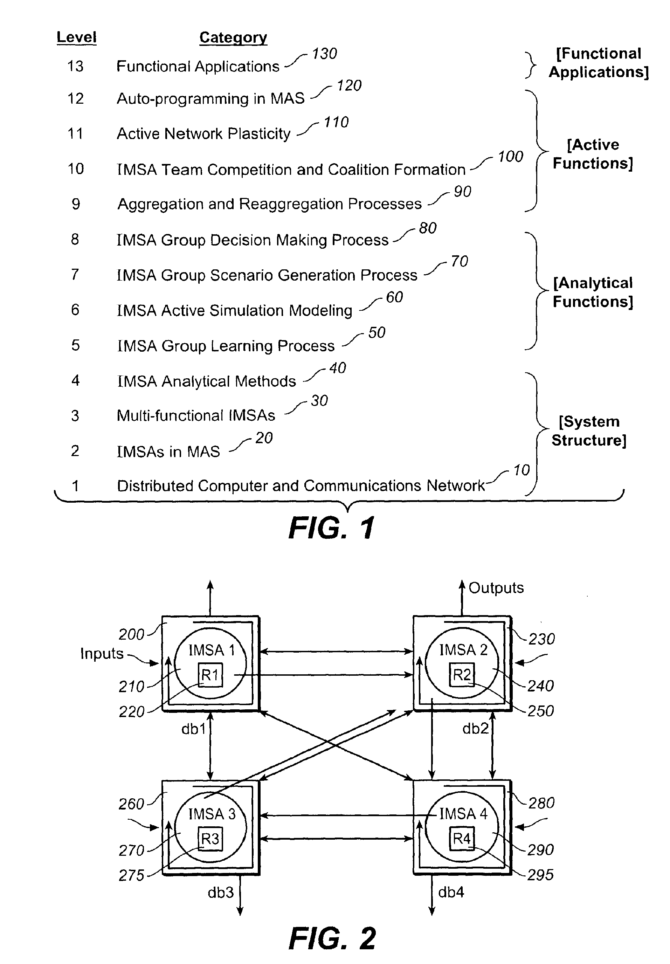

Fig. 1 illustrates the layers of the system for collective behaviors of intelligent mobile software agents. The first four levels organize the system structure. The next four levels represent the organization of analytical functions of groups of IMSAs. The next four levels represent the organization of action functions. The final level represents specific functional applications.

The first four levels pertain to the system structure. The first level involves a computer and communications network, with hardware consisting of microprocessors, application specific integrated circuits (ASICs) or field programmable gate arrays (FPGAs). These computer hardware components are linked in a communications network that may be a local area network, a wide area network or other types of complex node-to-node network. Each of these hardware components contains databases to store and access data.

In the second level, intelligent mobile software agents (IMSAs) operate in a multi-agent system (MAS). IMSAs are complex software entities comprised of auto-generating program code components that learn, adapt and solve problems in a changing and uncertain environment.

In the third level, IMSAs have multiple functionality. IMSAs combine specialty functions within a single entity in order to more efficiently meet goals or solve problems.

In the fourth level, individual IMSA analytical methods are organized to recognize data patterns and to collect and analyze data sets.

The second main system category represents group analytical functions of the fifth through eighth levels.

IMSA group learning processes are organized in the fifth level.

The sixth level organizes collective IMSAs' active simulation-modeling processes, while the seventh level organizes the IMSA group scenario-generation process and the eighth level organizes the IMSA group decision-making process.

Levels nine through eleven provide the third main functional category of active system functions.

Level nine shows the cooperative IMSA aggregation and reaggregation processes.

On level ten, IMSA team competition occurs as does coalition formation and reformation that arises from inter-team rivalry.

Active network plasticity occurs in level eleven and automated programming is organized in level twelve.

The final tier reveals the functional applications of the system applicable to, among other systems, automated commerce, collective robotics, enterprise resource management, molecular simulation modeling, optimal network management, mobile network management, advanced ubiquitous computing, personalized education, and interoperation of these various systems.

Fig. 2 shows a cluster of databases organized in a computer network. Each database is connected to the other in a decentralized node-to-node system. The first database, at 200, contains an IMSA, at 210, and a mobile hybrid software router, at 220. The software router provides analytical resources with which the IMSA solves problems. Similarly, IMSA 2 (240), containing software router 2 (250), is located in database 2 (230) and so on for databases 3 (260) and 4 (280).

Database types range from relational databases to object databases and from object-relational databases to temporal databases. Though the present system will operate with any of a range of databases, the preferred embodiment will use a distributed transformational spatio-temporal object-relational (T-STOR) database management system. The T-STOR database system is active, adaptive and optimized for the complex functions of IMSA collectives. In essence, the T-STOR dbms is organized for dynamic behaviors which anticipate and actively re-order the structure of the database to optimize real-time functions that require environmental interaction by constantly recategorizing and reprioritizing data sets. These dynamic functions allow these advanced databases to provide real time responsiveness and adaptability to environmental interaction processes.

When structured in a network of distributed T-STOR databases, the present invention optimizes the plasticity of the network by enabling it to dynamically adapt to a specific environment.

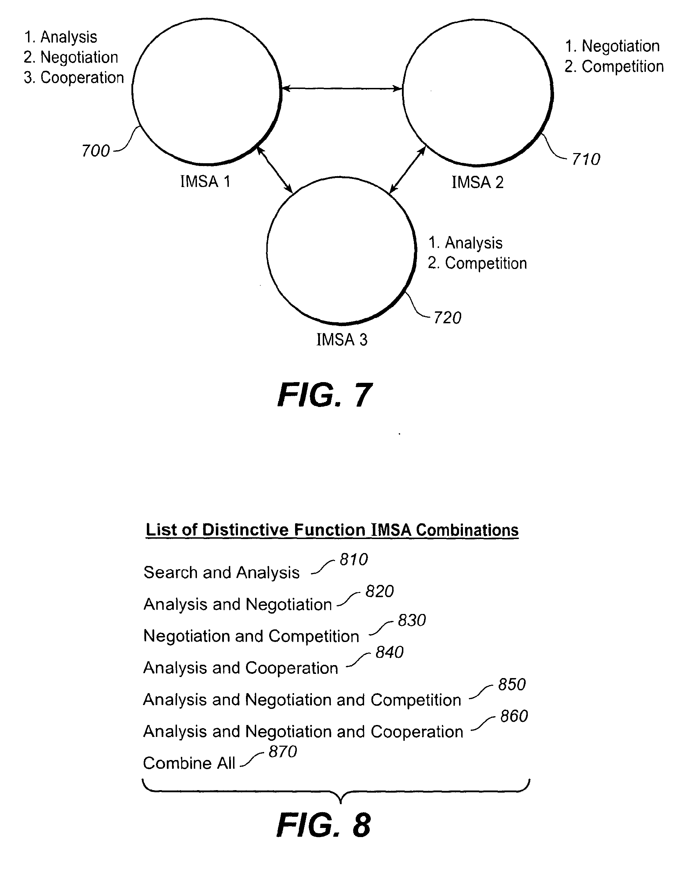

The mobile hybrid software routers are used by IMSAs for elasticity of functionality in order to provide code-on-demand. The routers combine specific computational and logical techniques in order to solve problems in real time. Because the routers are mobile, software program code efficiently "travels" with them (and the IMSAs) from location to location. As more code is needed for a specific task, programs are requested from external sources or internally generated, whereas if less code is needed, program code is discontinued as the router (or IMSA) moves between locations. Thus, inessential programs are subtracted in time-sensitive or mobile situations so as to maximize the efficiency of performing a task. See also the discussion at fig. 7 below.

In this figure, the arrows show a particular set of relationships. Specifically, IMSA 1 and IMSA 3 have a "dialogue" and negotiation at database 2. IMSA 2 moves to database 4, and IMSA 4 moves to database 3.

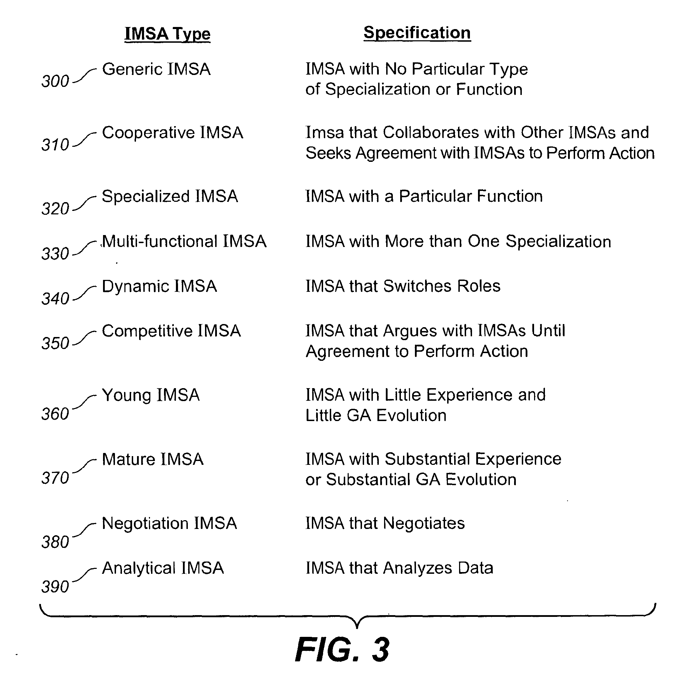

Fig. 3 is a chart of IMSA functional specialty types. Generic IMSAs, with no particular type of specialization, are shown at 300, cooperative IMSAs, which collaborate and seek agreement with other IMSAs to perform a specific action, are shown at 310, specialized IMSAs, which have a particular function, are shown at 320, multi-functional IMSAs, which perform more than one specialization, are shown at 330, dynamic IMSAs, which switch roles, are shown at 340, competitive IMSAs, which argue with other IMSAs until agreement is reached to perform an action, are shown at 350, young IMSAs, which have very little experience or evolutionary computation development, are shown at 360, mature IMSAs, which have an abundance of experience or evolutionary computation development, are shown at 370, negotiation IMSAs are shown at 380 and analytical IMSAs at 390. This list is not intended to represent a complete IMSA typology but merely delineates several main types for illustrative purposes. In addition, it is possible for IMSAs to become specialists "on demand" as the need requires by requesting or generating program code to satisfy specific functional parameters.

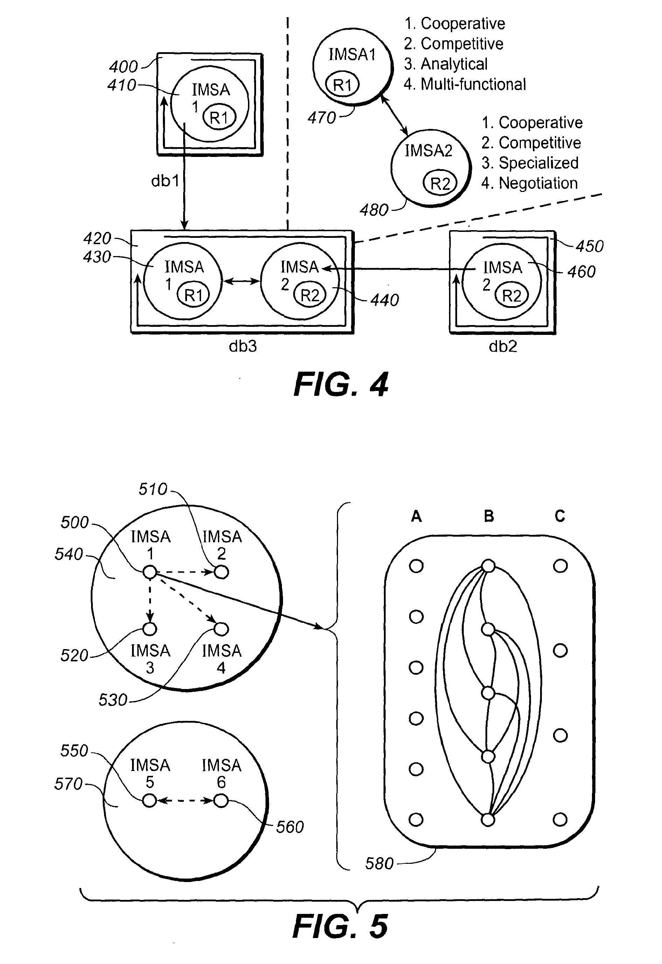

Fig. 4 shows the switching of roles between main IMSA functions. IMSA 1 (410) and IMSA 2 (460) move from database 1 (400) and database 2 (450), respectively, to database 3 (420), at positions 430 and 440. Note that in the cutout, at 470 and 480, the two IMSAs interact and use different sequences of operational modes in order to achieve a goal, with IMSA 1 employing a cooperative, then competitive, then analytical and finally multi-functional sequence of operational modes, while IMSA 2 employs a cooperative, then competitive, then specialized and, finally, negotiation sequence of operational modes.

Fig. 5 depicts the IMSA communication model. Several communication modes are used by IMSAs. The simplest approach is the dialogue model used by IMSA 5 (550) and IMSA 6 (560) at 570. Referring to the set of IMSAs at 540, IMSA 1 (500) has a role as "team leader" of the group of IMSAs 1, 2 (510), 3 (520) and 4 (530) and "microcasts" instructions to IMSAs 2, 3 and 4. At the same time, we see that IMSA 1 (500) is broadcasting to sets of IMSAs in groups A, B and C (580). Finally, intra-team dialogues between IMSA specialists occur among members of team B.

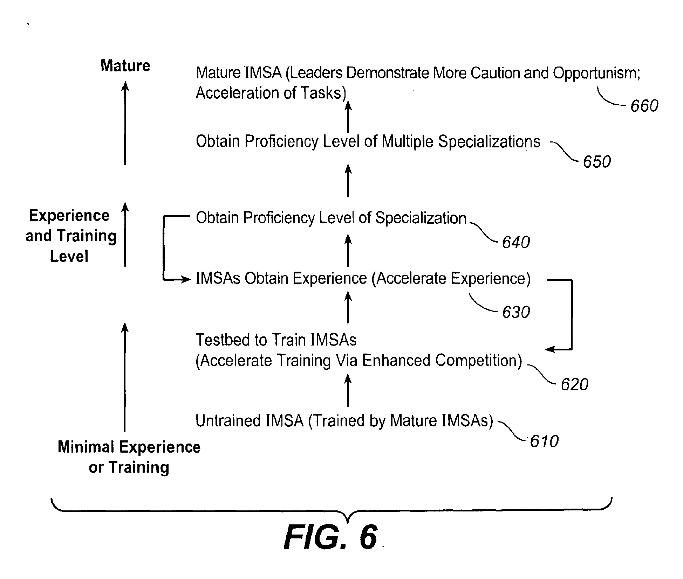

Fig. 6 shows the IMSA training procedure. The figure demonstrates that IMSAs use evolutionary computation techniques, including genetic algorithms, genetic programming, evolutionary programming and artificial neural networking techniques in order to train multiple generations of programs to allow IMSAs to achieve a level of functionality such that they can operate in groups and interact with a changing environment to achieve a goal. As fig. 6 illustrates, the training process progresses as an untrained or inexperienced IMSA evolves into a mature and experienced IMSA. The process begins with untrained IMSAs (610) which are trained by mature IMSAs. A test bed accelerates IMSA training by way of enhanced competition (620). IMSAs then obtain experience (630) at a higher level.

Some IMSAs return to the test bed to continue to train, while others move on to obtain proficiency at a level of specialization (640). Some of these specialized IMSAs return to obtain more experience, while other specialized IMSAs move on to obtain a higher level of proficiency in multiple specializations (650). The most mature IMSAs (660), the evident "thought" leaders because of their higher-echelon specialization and experience, in turn train untrained IMSAs. At each stage in the process, qualifying thresholds are met. A matrix of experience level, (accumulation of) specialization and evolutionary computation training can be constructed to show the combinations of IMSA training features. The amalgamation of unique IMSA features in specific collectives allows the IMSAs to solve a range of specific functional problems.

Fig. 7 shows three IMSAs, at 700, 710 and 720, each of which has a unique set of multiple functions in order to accomplish specific missions. IMSA 1 has analytical, negotiation and cooperation capabilities, IMSA 2 has negotiation and competitive capabilities and IMSA 3 has analytical and competitive capabilities. Adding and subtracting functionality involves increasing or decreasing mobile code so as to decrease the burdens on limited computation resources in the process of activating mobility capabilities. With less program code, the IMSA is more efficient with relatively equivalent computation processing capabilities. In the above example of three IMSAs interacting to complete a mission, teams of IMSAs work together to complete a task or solve a problem using a division of labor, with different specialists responsible for key parts of the overall project, so as to increase efficiency and productivity. IMSAs may also accumulate functionality, and experience, to maximize the skills available to complete available tasks.

Fig. 8 shows distinctive functional combinations of an IMSA collective. IMSAs may contain a range of functional combinations that enable them to efficiently complete a task. While these are not intended to be a complete list of combinations of IMSA functions, examples of unique IMSA combinations include: search and analysis (810), analysis and negotiation (820), negotiation and competition (830), analysis and cooperation (840), analysis, negotiation and competition (850), analysis, negotiation and cooperation (860) or all specific types (870). These various unique IMSA functional combinations allow IMSAs to work in groups to achieve goals more efficiently than specific functional IMSA capabilities alone can do; although the division of labor is necessary to increase productivity for individual specialty IMSAs, fewer multi-functional IMSAs are required to achieve the same output as many simpler IMSAs.

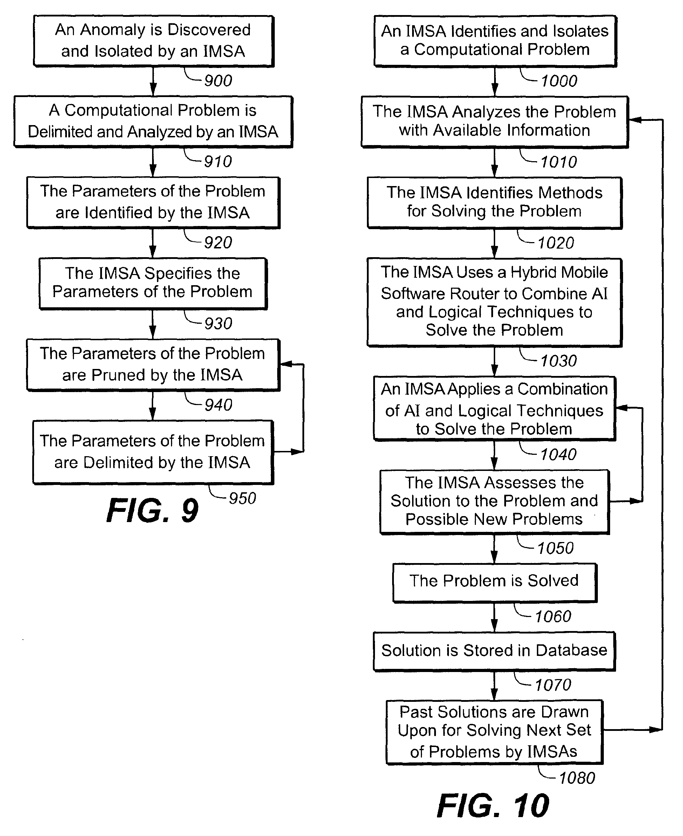

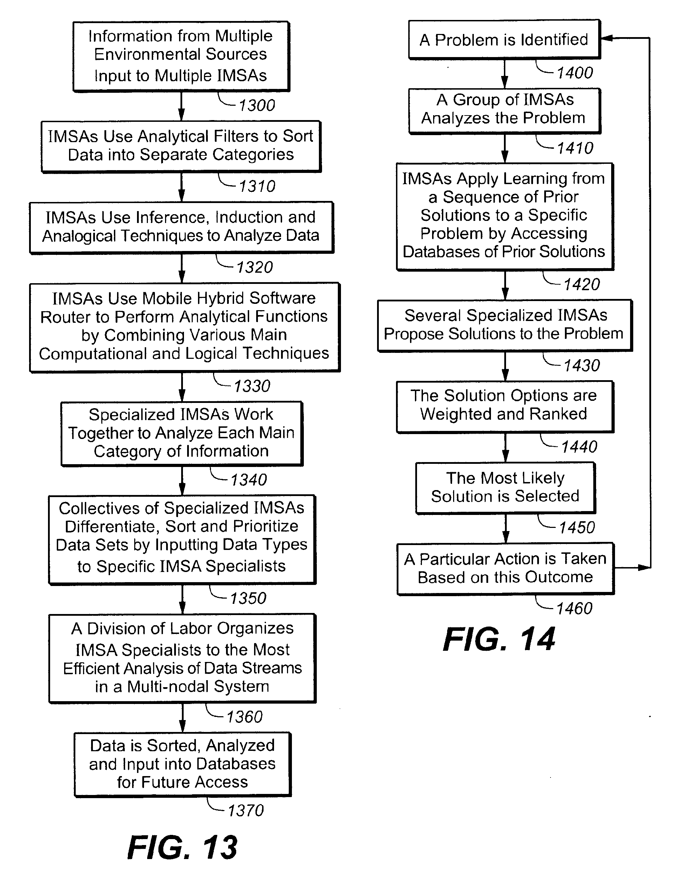

Figs. 9 through 12 show individual IMSA analytical methods, while Figs. 13 through 18 show collective analytical processes.

Fig. 9 sets forth a problem-finding procedure for an IMSA. After an anomaly is discovered and isolated by an IMSA (900), a computational problem is delimited and analyzed (910) by identifying (920) and specifying (930) the parameters of the problem. The parameters of the problem are then pruned (940) and delimited (950) by the IMSA and re-pruned when necessary in order to adequately narrow the range of the problem.

Fig. 10 shows how IMSAs address problem-based solutions. After an IMSA identifies and isolates a computational problem (1000), the IMSA analyzes the problem with available information (1010) and identifies methods for solving the problem (1020). The IMSA then uses a hybrid mobile software router to combine artificial intelligence (AI) and logical techniques to solve the problem (1030) and actually applies a combination of AI and logical techniques to solve the problem (1040). After the IMSA assesses the effectiveness of the initial solution to the problem and possible new problems (1050), the IMSA either re-applies combinations of AI and logical techniques to solve the problem (1040) or actually solves the problem (1060). Once the problem is solved, the solution is catalogued in a database (1070); in one embodiment, additional copies of the solution are stored in external databases. Past solutions are drawn upon for solving the next set of problems by IMSAs (1080) which are re-used at 1010 in analyzing a problem with the available information.

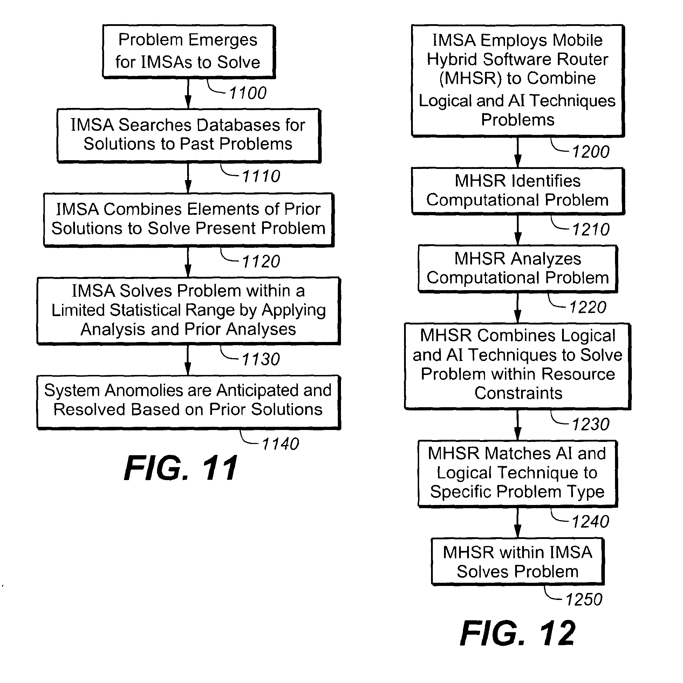

Fig. 11 shows the application of Bayesian analysis applied to the accumulated experience of an IMSA. After a problem emerges for IMSAs to solve (1100), an IMSA searches databases for solutions to past problems (1110) and combines elements of prior solutions to solve the present problem (1120). The IMSA then solves the problem within a limited statistical range by applying analytical tools and experience from prior analyses (1130). Bayesian techniques can anticipate problems by anticipating anomalies and resolving them with access to prior solutions (1140).

Fig. 12 shows the application of a mobile hybrid software router to an IMSA. An IMSA uses a mobile hybrid software router (MHSR) to combine logical and AI techniques to solve problems (1200). After identifying a computational problem (1210), the MHSR identifies (1210) and analyzes (1210) the problem and combines logical and AI techniques to solve the problem within the resource constraints (1230). The MHSR, contained within the IMSA, matches AI and logical techniques to specific problem types (1240) and solves the problem (1250).

Fig. 13 shows the process of IMSA collective information sharing and analysis. After information from multiple environmental sources is input to multiple IMSAs (1300), IMSAs in a collective use analytical filters to sort data into separate categories (1310). IMSAs use inference, induction and analogical techniques to analyze data (1320). IMSAs also use mobile hybrid software routers to perform analytical functions by combining various main AI, computational and logical techniques (1330). Specialized IMSAs work together to analyze each main category of information from the decentralized group (1340), and collectives of specialized IMSAs then differentiate, sort and prioritize data sets by inputting data types to specific IMSA specialists (1350). A division of labor organizes IMSA specialists for the most efficient analysis of data streams in a multi-nodal system (1360), and data is sorted, analyzed and input into databases for future access (1370). In this way, a multi-nodal, multi-phasal analysis is organized as a sort of "group think", which may accelerate processes to achieve a task or solve a problem. IMSAs thereby bounce ideas off each other in the context of seeking to solve a problem, thereby making learning a social activity.

In fig. 14, a Just-in-Time IMSA learning process with groups of IMSAs is laid out. After a problem is identified (1400), a group of IMSAs analyzes the problem (1410), and a group of IMSAs apply learning from a sequence of prior solutions to a specific problem by accessing databases of prior solutions (1420). Several specialized IMSAs propose solutions to the problem (1430), and these solution options are weighted and ranked (1440). The most likely solution is selected (1450), and a particular action is taken based on this outcome (1460) until another problem is identified.

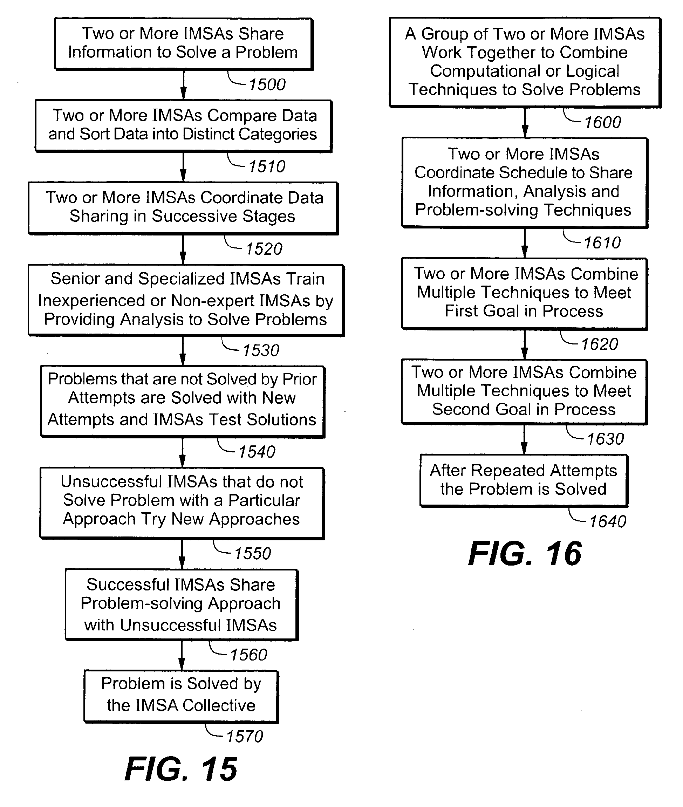

Fig. 15 shows the social aspects of Bayesian analysis applied to a group of IMSAs. After two or more IMSAs share information to solve a problem (1500), they compare and sort data into distinct categories (1510). Two or more IMSAs then coordinate data-sharing in successive stages (1520), with senior and specialized IMSAs training inexperienced or non-expert IMSAs by providing analysis to solve problems (1530). Problems that are not solved by prior attempts are solved with new attempts of IMSAs testing solutions (1540). Unsuccessful IMSAs that do not solve a problem with a particular approach will try to solve the problem by applying new approaches (1550). Those IMSAs that are successful at solving the problems share problem-solving approaches with unsuccessful IMSAs (1560). The problem is then solved by the IMSA collective (1570). In effect, this process allows "leaming-on-demand" in groups so as to maximize the effectiveness of solutions to problems as they arise.

Fig. 16 shows the IMSA collective hybrid social learning process. A group of two or more IMSAs work together to combine computational or logical techniques to solve problems (1600). Two or more IMSAs coordinate the schedule to share information, analysis and problem-solving techniques (1610) and combine multiple computational techniques to meet the first goal in the process (1620) and the second goal in the process (1630); after repeated attempts, the problem is solved (1640). The goal-directed process of social problem-solving by groups of IMSAs allows the opportunity to combine various techniques to solve problems gathered from multiple diverse IMSAs.

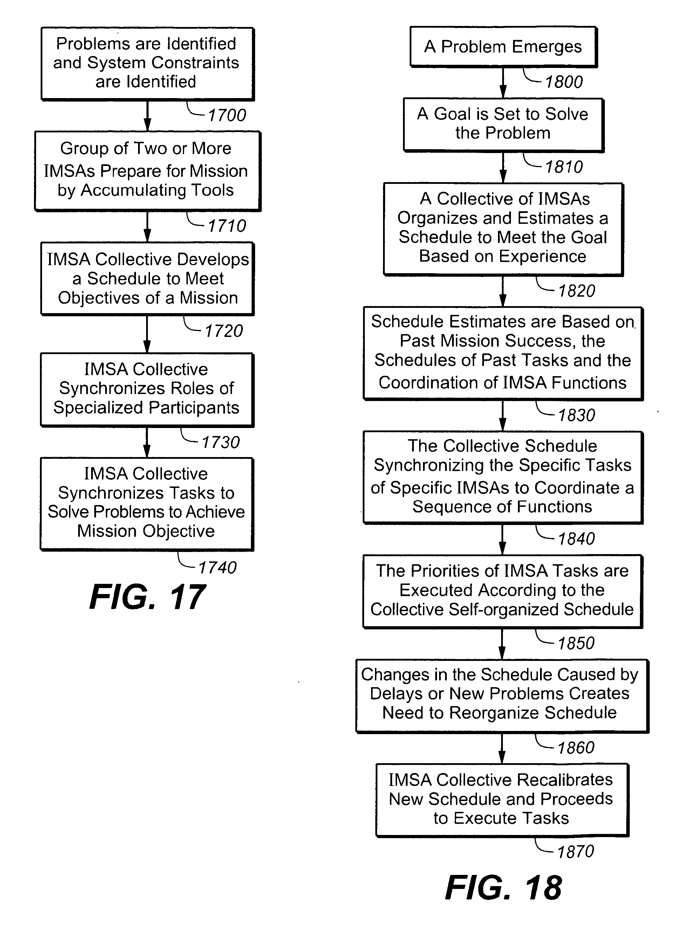

Fig. 17 illustrates the mission-specific IMSA cooperation process. After problems and system constraints are identified (1700), a group of two or more IMSAs prepare for a mission by accumulating tools (1710), and the IMSA collective develops a schedule to meet mission objectives (1720). Once the IMSA collective synchronizes the roles of specialized participants (1730) and the tasks to solve problems to achieve a specific objective (1740), the collective completes the mission (1750).

Fig. 18 illustrates the IMSA collective schedule formation and synchronization process. After a problem emerges (1800), a goal is set to solve the problem (1810), and an IMSA collective organizes and estimates a schedule to meet the goal based on experience (1820). The schedule estimates are based on past mission success, the schedules of past tasks and the coordination of IMSA functions (1830). The IMSA collective schedule synchronizes the specific tasks of specific IMSAs to coordinate a sequence of functions (1840). The priorities of IMSA tasks are executed according to the collective's self-organized schedule (1850), while changes in the schedule caused by delays or new problems creates the need to reorganize the schedule (1860). The IMSA collective recalibrates a new schedule and proceeds to execute tasks (1870) until further problems emerge.

Traditionally, computation processes use hash tables to organize scheduling. However, complex distributed tasks require continuous recalibration of time tables, which emphasize the temporal aspects of the system. As data flows require the reprioritization of tasks and goals among IMSAs, there is a constant updating of schedules, which necessitates evolving time tables. The data flow dynamics of the self-organizing system involve the need for dynamic and evolving time tables that reclassify and rearrange schedules in order to optimize the problem-solving processes of groups of IMSAs.

The use of evolving time tables to continuously restructure schedules to accommodate distributed dynamic activities is further optimized with the use of temporal databases. As data streams from the external environment are input into the distributed temporal databases, they are continuously rerouted to optimize data flows. Temporal databases provide the adaptive and flexible functions of reprioritizing data flows so as to maximize their utility. As temporal dynamics change the priority of the data objects, the temporal databases rearrange the data classification structure. In addition, temporal databases allow the anticipation, and the delimitation, of possible future behaviors based on analyses of past trajectories. Thanks to the use of temporal databases, evolving time tables and their data object synchronizations and scheduling are optimized.

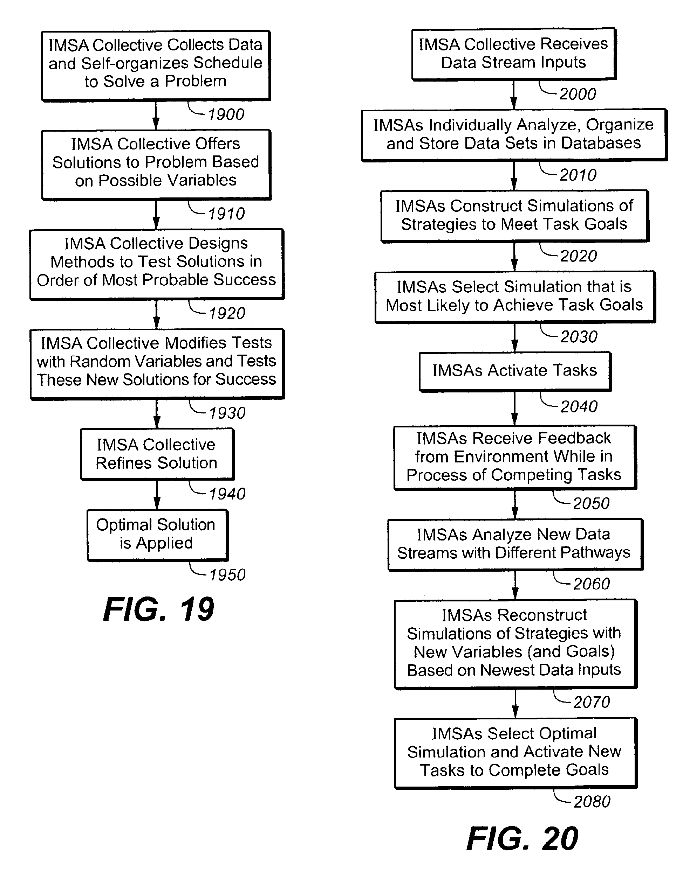

Fig. 19 shows the experimentation process of IMSA strategies using a simulation-testing process. Once the IMSA collective gathers data and self-organizes a schedule to solve a problem (1900), the collective offers solutions to the problem based on possible variables (1910) and designs methods to test solutions in an order most probable for success (1920). The IMSA collective modifies the solution-testing process with random variables and tests these new solutions for success (1930), then refines the solutions (1940). The optimal solution is then applied to the problem (1950).

Fig. 20 illustrates the active use of IMSA simulations to represent environmental data, feedback and collective behavior adaptation. After an IMSA collective receives data stream inputs (2000), IMSAs individually analyze, organize and store data sets in databases (2010). IMSAs then construct simulations of strategies to meet task goals (2020) and select a simulation that most likely will achieve the goals (2030). The IMSAs then activate the tasks (2040) and receive feedback from the environment during the process of completing tasks (2050). IMSAs analyze new data streams with different pathways (2060) and reconstruct simulations of strategies with new variables (and goals) based on the newest data inputs (2070). The IMSAs select optimal simulations and activate new tasks to complete goals (2080).

Simulations are computational modeling processes that can be characterized somewhere between deductive methodology and inductive methodology. With computer simulations, researchers can actively organize and reorganize possible multivariate scenarios in order to identify and select an optimal pathway for action. In the context of IMSA collectives, simulations are also useful for actively organizing possible scenarios in order to identify an optimal pathway for action. For groups of IMSAs, simulation processes work in a manner similar to experimentation, wherein various possible scenarios are identified and tested and the best path selected for the optimum outcome. IMSAs constantly generate simulations in order to provide the range of possibilities for planning courses of action.

Possible scenarios are developed by specific IMSAs given the limited information that is available to each IMSA. These scenarios include counterfactual situations that modify variables of inputs in order to yield alternative possible outcomes. In some cases, alternative assumptions are considered in order to generate an appropriate range of counterfactuals. Each scenario is tested for probable strategic outcome, and the various IMSAs analyze, evaluate and select the best available scenario for the IMSA group from among the multiple IMSA possible scenarios that are generated to carry out a strategy for completing a goal or solving a problem. See also the discussion below involving modal logic and temporal logic in the analysis and selection of possible behaviors.

Counterfactuals present alternative assumptions about possible trajectories of actions for non-deterministic processes. As a practical matter, the set of possibilities that counterfactuals provide are limited to the most probable set of variables that will produce the most probable effects; rather than speaking of "possible worlds," we are speaking of the most "probable worlds." This analysis therefore restricts the simulation range to the most probable sets of scenarios. For example, an analysis of history generally yields few genuine surprises but rather a number of threshold conditions of actions that yield contingent sequences; with more information provided at each stage, it is possible to continuously update the optimum scenario and thereby improve predictability.

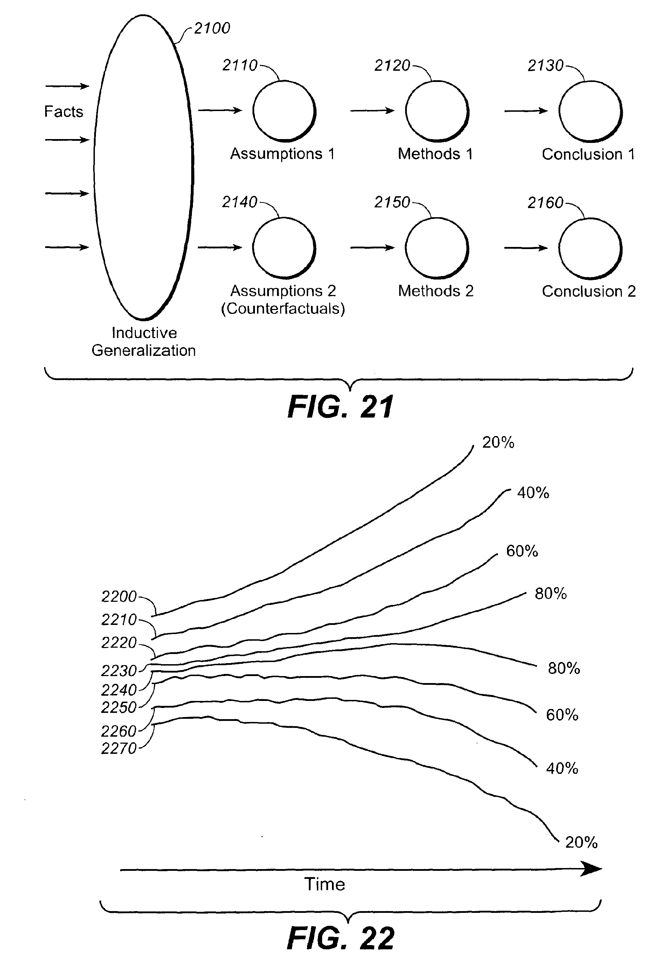

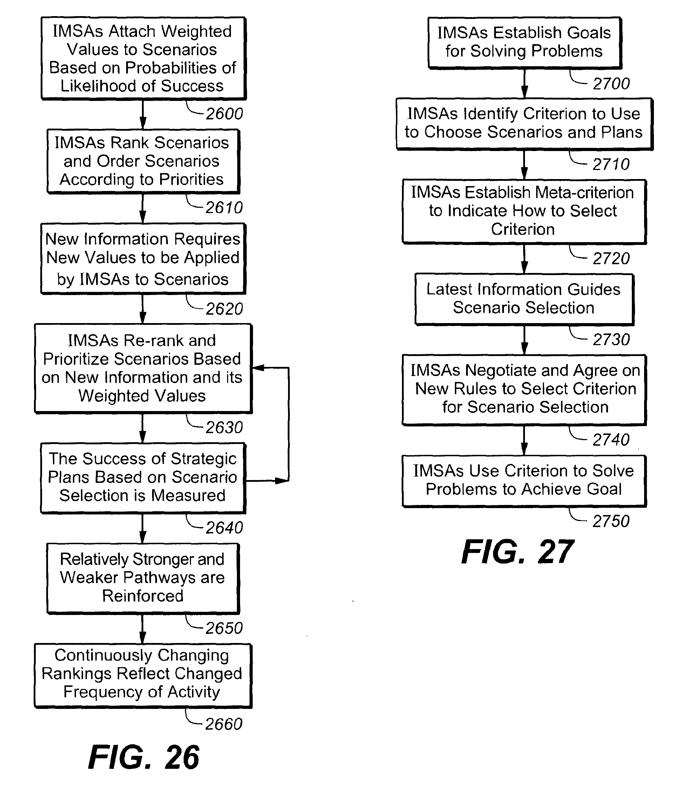

Figs. 21 to 25 discuss scenario planning by IMSA groups, while Figs. 26 to 29 discuss the scenario selection process by groups of IMSAs.

In fig. 21, the generation of counterfactual scenarios by IMSA groups is shown. Once a set of facts from the external environment is processed using inductive generalization (2100), specific assumptions (2110) and methods (2120) are applied to reach a conclusion (2130). However, from the same data sets (2100), alternative (or counterfactual) assumptions (2140) and different methods (2150) may be applied to reach different conclusions (2160). Although contingent scenarios are dependent on specific events, a narrow range of scenario options with the latest available information may reveal that other facts or assumptions are true and hence yield a different consequence. For every proof in these possible worlds, there is a counterproof. The use of counterfactuals is important because in the development of IMSA arguments to persuade other IMSAs, some IMSAs may provide counterfactuals and counterproofs to the group's dominant scenario selection option and may thus necessitate modification by an IMSA collective of an initially-selected strategic plan of action.

Fig. 22 shows the prediction of external actions by groups of IMSAs within probabilistic constraints. Predictions are made within statistical limits; in this figure, the chances of achieving eighty percent variance in meeting a goal is illustrated by the space between 2230 and 2240, the chances of achieving sixty percent variance of a goal is shown between 2220 and 2250, the chances of achieving forty percent variance in meeting a goal is shown between 2210 and 2260 and, finally, the chances of achieving twenty percent variance in reaching a goal is shown between 2200 and 2270.

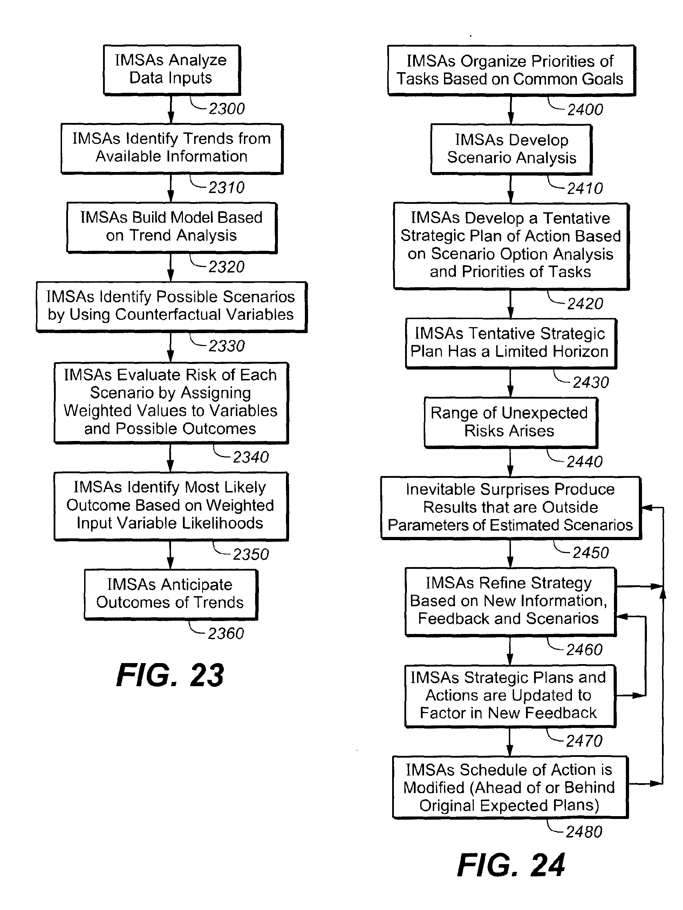

In Fig. 23 the anticipation process of dynamic environmental action by IMSA collectives is shown. After analyzing data inputs (2300), IMSAs identify trends from available information (2310) and build a model based on trend analysis (2320). IMSAs then identify possible scenarios by using counterfactual variables (2330) and evaluate the risk of each scenario by assigning weighted values to variables and possible outcomes (2340). The IMSAs then identify the most likely outcome based on weighted input variable likelihoods (2350) and anticipate trend outcomes (2360).

Fig. 24 shows IMSA collectives using probability analysis to plan for unexpected actions. IMSAs initially organize priorities of tasks based on common goals (2400) and develop a scenario analysis (2410). IMSAs subsequently develop a tentative strategic plan of action based on scenario option analysis and priorities of tasks (2420). The IMSAs' tentative strategic plan has a limited horizon (2430). A range of unexpected risks arises (2440), and inevitable surprises produce results that are outside the parameters of estimated scenarios (2450). The IMSAs refine strategy based on new information feedback and new scenarios (2460) which continue to either produce surprises or firm up IMSAs' strategic plans and actions, which are updated to factor in new feedback (2470). The strategies are continuously refined, and the IMSAs' schedule of action is modified, either ahead of or behind the originally expected plans (2480).

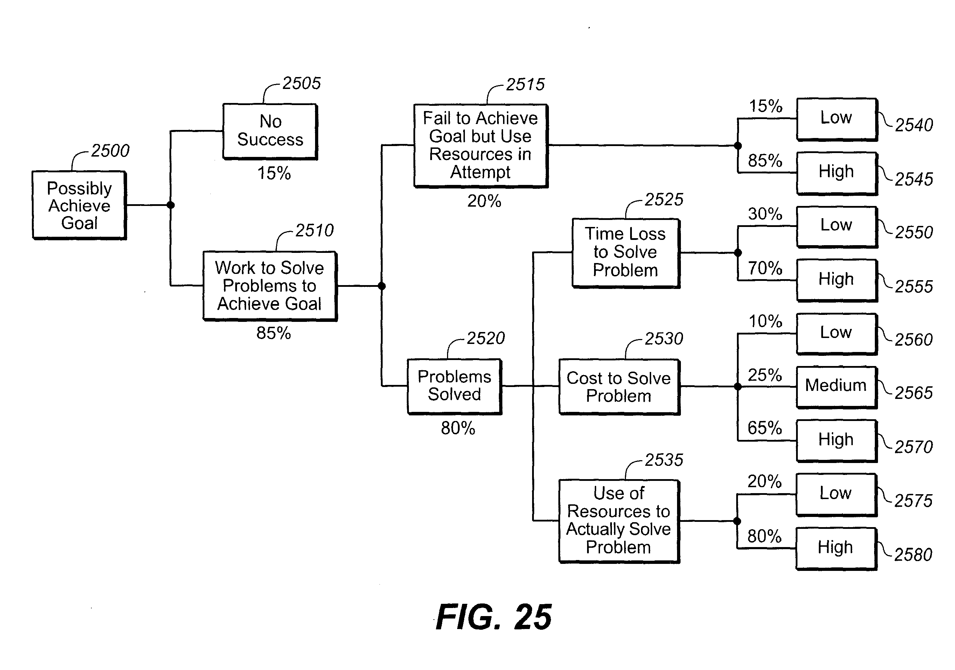

Fig. 25 shows the generation of solution options to problems by IMSA groups. At each stage of the process, statistics measure the probabilities of success. The possibility of achieving a goal (2500) is divided into 15% chance of no success (2505) or 85% chance of solving problems to achieve a goal (2510). There is a remaining 20% chance of failing to achieve the goal, though computation and communication resources are used in the attempt (2515). In the event of failure, there is a low chance (15%) (2540) and a high chance (85%) (2545) of substantial time use which likely increases costs even without problem-solving success. On the other hand, there are substantial risks of a loss of time to solve the problem (2525), with a 30% chance (2550) and a 70% chance (2555) of a high time demand associated with the use of computation and communication resources to solve the problem. Similarly, the cost of using computation and communication resources to solve the problem (2530) may be low, with a 10% chance (2560), medium, with a 25% chance (2565) or high, with a 65% chance (2570). The actual use of resources to solve the problem (2535) can be either low, with a 20% chance (2575) or high, with an 80% chance (2580). These statistical examples are intended to be illustrative only and merely represent a specific embodiment. Numerous embodiments of the present invention may involve varied probabilities.

Fig. 26 shows the process of ranking and re-ranking scenarios by IMSA groups. IMSAs attach weighted values to scenarios based on probabilities of success (2600) and rank and order the scenarios according to priorities (2610). New information requires new values to be applied by IMSAs to the scenarios (2620), and IMSAs re-rank and reprioritize scenarios based on new information and its weighted values (2630). The success of the execution of strategic plans (based on scenario selection) is measured (2640), with relatively stronger or weaker pathways for action reinforced (2650). Continuously changing rankings reflect changed frequency of activity (2660).

Fig. 27 illustrates the process of scenario selection by IMSA groups. IMSAs first establish goals for problem solving (2700) and identify criteria to use to choose scenarios and plans (2710). IMSAs then establish meta-criteria to adjudicate criteria selection (2720), and, guided by the latest information, select the best scenario (2730). IMSAs negotiate and agree on new rules for scenario selection criteria (2740) and IMSAs use the criteria to solve problems to achieve a goal (2750).

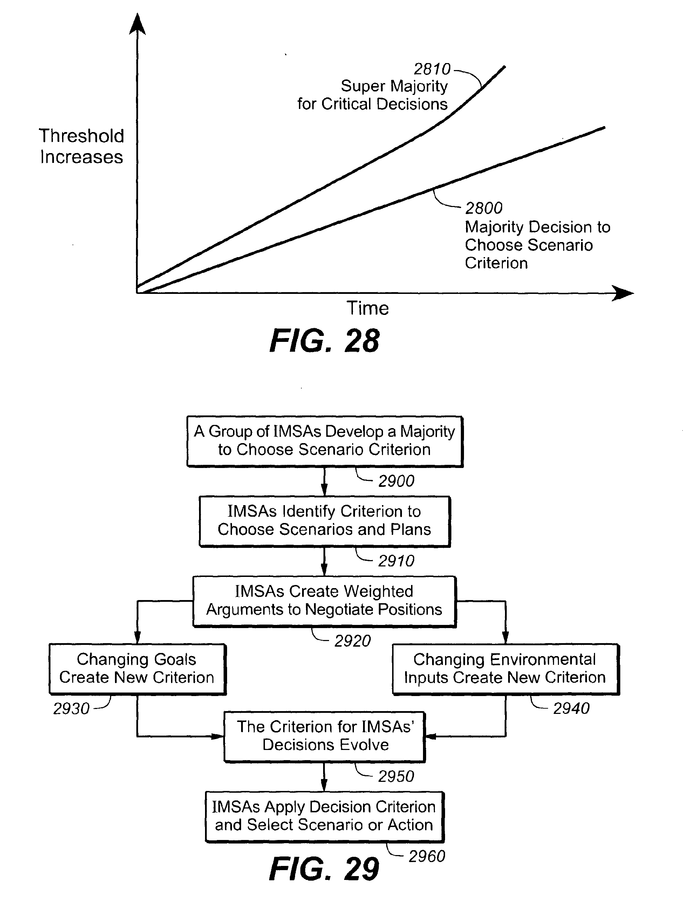

Fig. 28 is a diagram showing the application of majority rules in the scenario selection process by groups of IMSAs. Over time, it is necessary for a majority of IMSAs to choose a scenario criterion (2800). However, for increasingly important or critical decisions, it is necessary to increase the threshold for agreement between IMSAs to impose a requirement that a supermajority of IMSAs chooses a scenario criterion (2810).

Fig. 29 shows the process of evolving criteria for scenario selection by IMSA groups. A group of IMSAs develops a majority that chooses a scenario criterion (2900) and identifies the criterion for choosing scenarios and plans (2910). The IMSAs create weighted arguments to negotiate positions (2920), and either changing goals create new criteria (2930) or changing environmental inputs to drive the creation of a new criteria (2940). In either event, the criteria for IMSAs' decisions evolve (2950), and IMSAs apply the decision criteria in order to select a scenario or an action (2960).

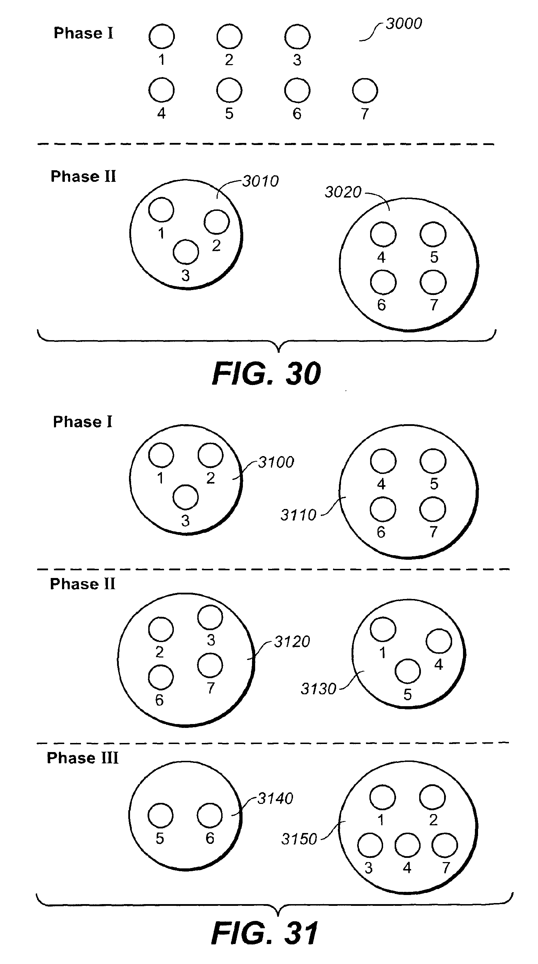

The initial grouping of an IMSA collective into behavior patterns of aggregation positions is triggered by the program parameters of various IMSAs to solve a problem or to achieve a goal. Fig. 30 is a multi-phasal drawing showing the cooperation of IMSA groups in aggregation behavior. In phase one, the various IMSAs of one through seven are collected (3000) and organized in phase two into a group consisting of IMSAs one, two and three (3010) and another group consisting of IMSAs four, five, six and seven (3020). The initial grouping configurations as illustrated here are cooperative.

Groups of IMSAs participate in mission-specific projects in which particular IMSAs are added or subtracted from the emergent collective at key times in the aggregation process. After the initial aggregation process, the interaction of the IMSA collective with the external environment allows a change in the IMSA group configuration. This re-aggregation process can consist of requests that IMSAs with complementary specialties be added to the collective or that IMSAs not properly functional to meet the demands of the present goals be removed. The trigger that alters the configuration of the IMSA collective may be either internal or external. If it is internal, group decisions (based on program parameters) may demand the change; if external, environmental changes may require a modification. The constantly changing composition of the IMSA collective over time illustrates the re-aggregation process of continuously adjusting the parameters of optimum performance.

In fig. 31 the re-aggregation process of IMSA groups is shown. In phase I, the initial aggregation configures two groups of IMSAs, with IMSAs one, two and three in the first group (3100) and IMSAs four, five, six and seven in the second group (3110). In phase II, the groups are reconfigured, with a group of IMSAs comprised of IMSAs two, three, six and seven in the first group (3120) and IMSAs one, four and five in the second group (3130). Finally, in phase III, the groups are reconfigured again, with a group of IMSAs comprised of IMSAs five and six (3140) and a group comprised of IMSAs one, two, three, four and seven (3150).

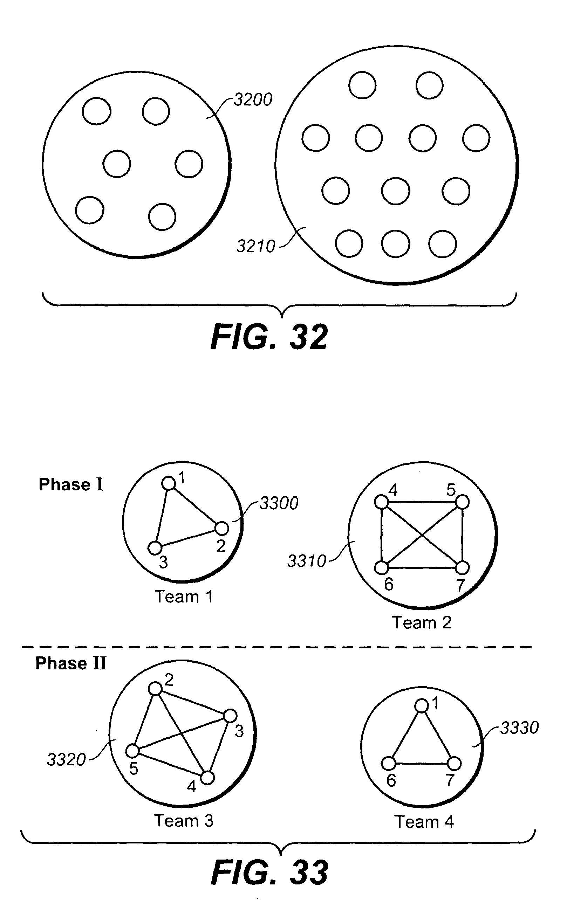

Fig. 32 depicts competition between teams of IMSAs. Six IMSAs from the first group (3200) compete with twelve IMSAs from the second group (3210). Fig. 33 shows the emergence of IMSA coalitions. In phase I, IMSAs one, two and three in Team 1 (3300) interact with IMSAs four, five, six and seven in Team 2 (3310). In phase II, the teams reconfigure into Team 3, consisting of IMSAs two, three, four and five (3320) and Team 4, consisting of IMSAs one, six and seven (3330).

The emergence of coalitions is an important part of IMSA re-aggregation processes. As bargaining between IMSAs in collectives occurs, the configuration of the groupings shifts in order to maximize their effectiveness at completing a goal or solving a problem. In general, the constantly shifting character of coalitions represents the IMSA collective's attempt to modulate the skills and tools necessary to accomplish a goal in a non-equilibrium environment. In effect, IMSA collectives constantly align contest-winning strategies that continually optimize the problem-solving goals in a perpetually shifting external environment. Such coalitions may be cooperative, competitive, or both.

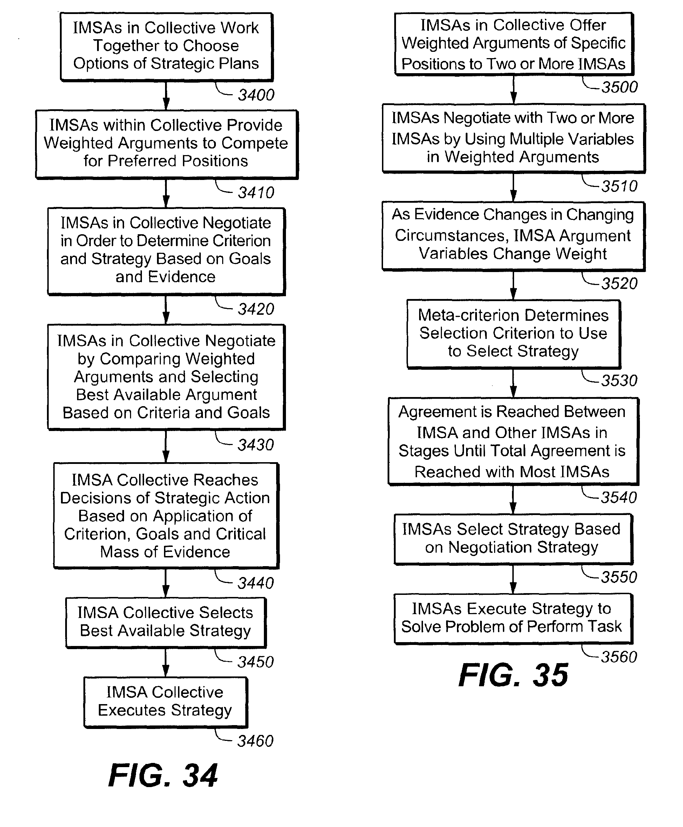

Fig. 34 portrays the selection of a best strategy by a team of IMSAs. After IMSAs in the collective work together to choose strategic options (3400) and provide weighted arguments to compete for preferred positions (3410), the IMSAs negotiate in order to determine a criterion and strategy based on goals and evidence (3420). IMSAs in the collective negotiate by comparing weighted arguments and selecting the best available argument based on the evolving criteria and goals (3430). The IMSA collective reaches decisions for strategic action based on applications of criteria, goals and the critical mass of evidence (3440). The IMSA collective selects the best available strategy (3450) and executes the strategy (3460).

IMSA groups may aggregate using cooperative or competitive operational models. Coalitions within an IMSA team will work together to organize a team strategy. In some cases, IMSAs in groups may alternate between cooperative and competitive stances, similar to the way individuals within bureaucratic organizations are cooperative or competitive with each other. Because IMSA groups are generally competitive with other IMSA groups, inter-team rivalries emerge.

Competition between groups may be multilateral, rather than merely bilateral, because there are multiple groups with which IMSA teams may compete, each match-up requiring a distinctive strategy. Game theoretic modeling is used by IMSAs to model the dynamics of the strategic interactions in complex multi-agent and multi-team environments. In order to develop mechanisms for competition between IMSA teams, negotiation and argumentation tactics are adopted to resolve disputes and to select common scenarios and strategies of action.

Using complex game theoretic modeling, IMSAs study the behavior of other IMSAs to discern their behaviors. However, for maximal negotiation potential in hostile environments, the signaling process of IMSA communications and actions must be disguised. As an example, in order to disguise its team strategy, an IMSA may employ a less than optimally efficient strategy to deceive the opposing team and achieve its objectives. In effect, IMSA team strategies simulate poker strategies. IMSA team strategies may oscillate between cooperative and competitive modes so as to seek competitive advantages over other teams and thereby achieve objectives. Over time, oligopolies of IMSA teams adapt their strategies in order to co-evolve with other IMSA teams. These processes are described in figs. 35 to 40.

Fig. 35 shows the multilateral and multivariate negotiation process within a cooperating group of IMSAs. After the IMSAs in the collective offer weighted arguments for specific positions to two or more IMSAs (3500), the IMSAs negotiate with two or more IMSAs by using multiple variables in weighted arguments (3510). As evidence changes in mutable circumstances, IMSA argument variables shift in weight (3520) and a meta-criterion determines how to select a strategy (3530). Agreement is reached between one IMSA and the other IMSAs in stages until total agreement is reached with most of the IMSAs (3540), and the IMSAs select an approach based on a negotiation strategy (3550). IMSAs then execute the strategy to solve a problem or perform a task (3560).

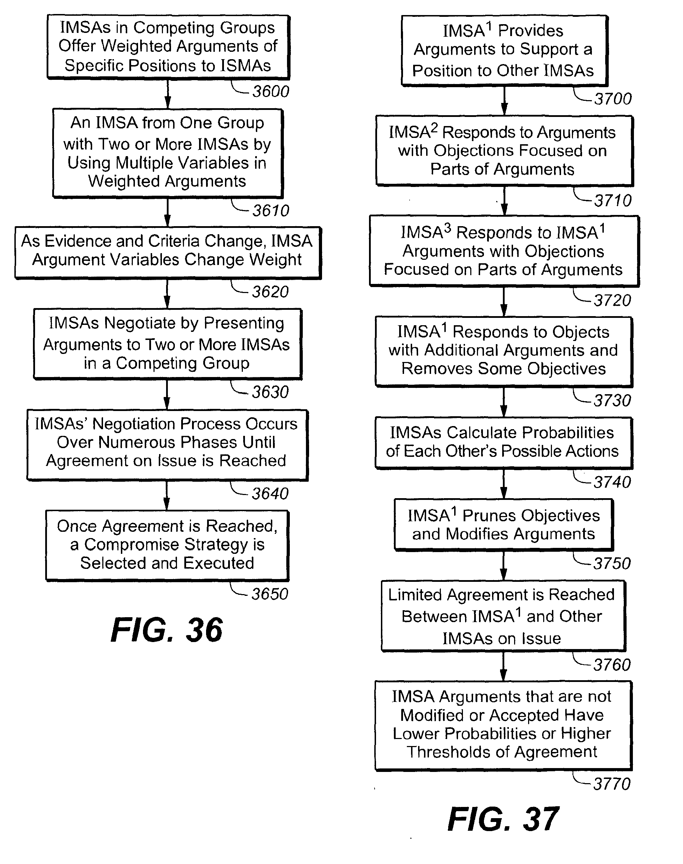

Fig. 36 exhibits the multilateral and multivariate negotiation process between two teams of IMSAs. After IMSAs in competing groups offer weighted arguments for specific positions to IMSAs (3600), an IMSA from one group negotiates with two or more IMSAs by using multiple variables in weighted arguments (3610). As evidence and criteria change, IMSA argument variables shift in weight (3620) and the IMSAs negotiate by presenting arguments to two or more IMSAs in a competing group (3630). The IMSA negotiation process occurs over numerous phases until agreement on an issue is reached (3640). Once agreement is reached, a compromise strategy is selected and executed (3650).

Fig. 37 displays the argumentation process within a team of IMSAs. After IMSA 1 provides arguments to support a position to other IMSAs (3700), IMSA 2 (3710) and IMSA 3 (3720) respond to IMSA l's arguments with objections focused on parts of arguments. IMSA 1 responds to the objections from IMSAs 2 and 3 with additional arguments and removes some of their objections (3730). IMSAs calculate the probabilities of each other's possible actions (3740), and IMSA 1 prunes objections and modifies the arguments further (3750). Limited agreement is reached between IMSA 1 and other IMSAs on an issue (3760), and IMSA arguments that are not modified or accepted have lower probabilities of (or higher thresholds to) agreement (3770).

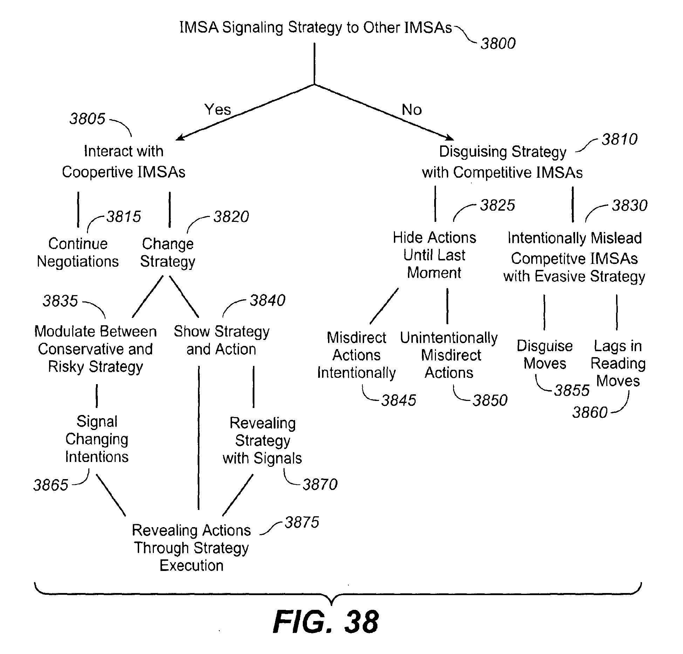

Fig. 38 indicates the process of IMSA signaling and the disguising of IMSA signals. The process begins with an IMSA signaling its strategy to other IMSAs (3800), typically through a specific pattern of behaviors. If it signals the strategy to other IMSAs, it is interacting with cooperative IMSAs (3805) and continues to negotiate (3815) or modifies its strategy (3820). If it changes its strategy, the IMSA either modulates between types of strategies (conservative vs. risky) (3835) or reveals its strategy and its active behavior (3840). If it modulates between different strategies, it reveals its signal-changing intentions (3865). If it is transparent in unveiling its strategy, it either reveals it with transparent signals (3870) or reveals actions through the execution of its strategy (3875).

If the IMSA does not signal its strategy to other IMSAs, it disguises its strategy by interacting primarily with competitive IMSAs (3810). If it disguises its strategy, it either hides its actions until the last moment (3825) or intentionally misleads competitive IMSAs with evasive strategy (3830). If it hides its actions until the last moment, it either misdirects actions intentionally (3845) or unintentionally misdirects actions (3850). If it intentionally misleads competitive IMSAs with an evasive strategy, it either disguises its moves (3855) or intentionally produces lags in its timing of moves in order to disguise the transparency of its moves (3860).

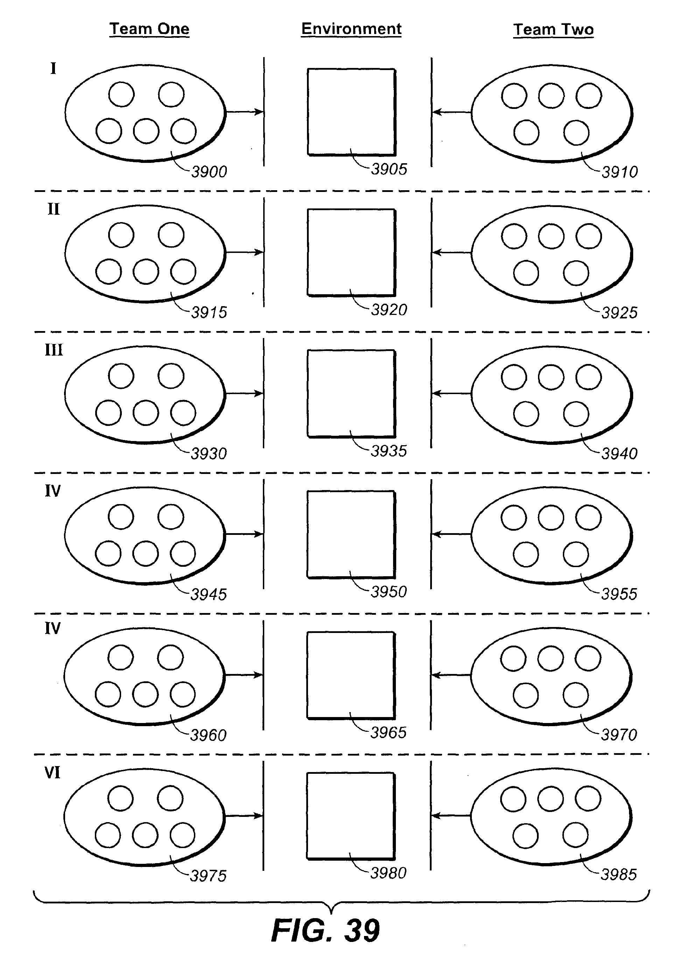

Fig. 39 shows the co-evolution of IMSA team strategies aligned in accordance with adaptation to a changing environment. At phase I, team one (3900) and team two (3910) interact with each other and with the environment (3905). This process is carried out at phases II, III, IV, V and VI in this illustration, as the teams perform specific functions.

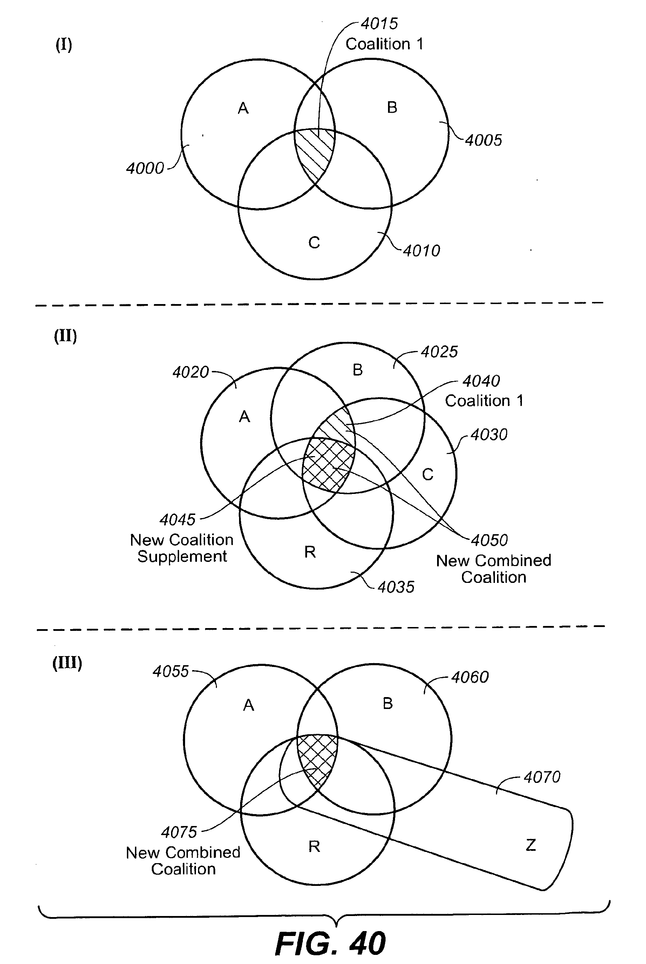

In fig. 40 the evolution and transformation of coalitions in a dynamic environment is illustrated. In phase I, IMSA collective teams A (4000), B (4005) and C (4010) overlap in coalition 1 (4015). In phase II, the original coalition 1 (now at 4040) occurs at the junction of the same teams (A at 4020, B at 4025 and C at 4030), while an additional team R (4035) is now present. The addition of R provides a new coalition supplement (4045) to coalition 1. In phase III, team C is removed and team Z (4070) is added to teams A (4055), B (4060) and R (4065), and a new combined coalition (4075) is formed. The continual regrouping processes produce unique configurations of coalitions at specific cross-sections of time.

Plasticity is the process of reconfiguring a network. In general, "regular" patterns of pathways are reinforced, while patterns of less-used pathways disappear over time. These behaviors are common to insect and animal communities as well as communications and economic networks. One paradigm of plasticity behaviors is the human brain, which learns patterns and may continually re-learn new behaviors as needed for adaptation even as it drops patterns, for example, of unused language skills. In effect, the human brain "re-wires" itself in order to adapt to complex new environments.

One of the notable variables in the plasticity phenomenon is its critical temporality. After a period of relative normalcy, a key external event may create the need for an intense burst of activity or a correspondingly large drop-off in activity. Temporal logic is an excellent tool to use in mapping these complex network transformations. The elasticity of supply and demand activity in commercial hubs, for instance, can be tracked using temporal logic which traces the specific geodesic connections between each part of the network at specific phases of time.

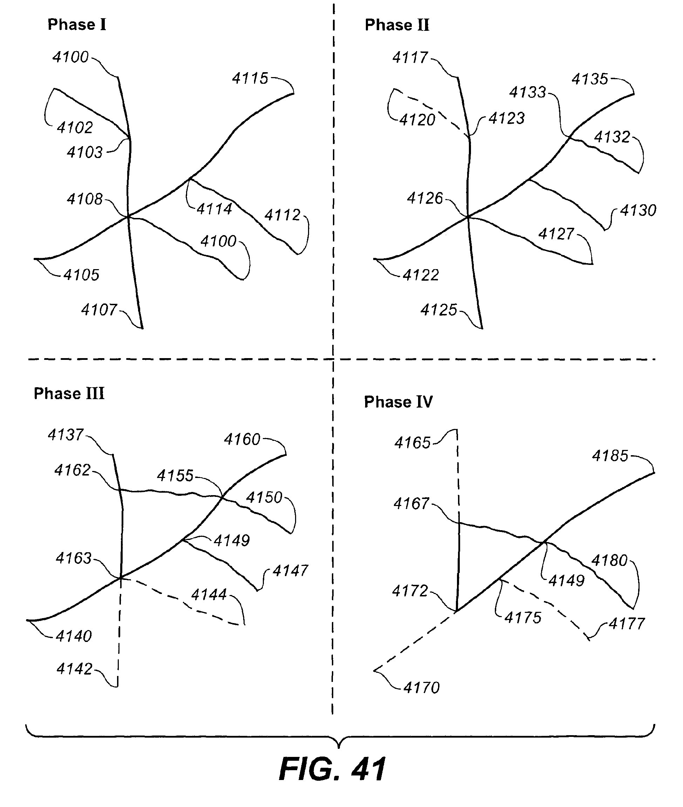

Fig. 41 shows the process, in four phases, of plasticity in the rewiring of a network of IMSA groups. In phase I, the links of a network configuration are shown. However, in phase II, the link between 4120 and 4123 has been little used, while the link between 4132 and 4133 has been added. At phase III, the link between 4162 and 4155 has been added, while the links between 4163 and 4144 and 4163 and 4142 have been little used. Finally, at phase IV, the link between 4175 and 4177, the link between 4165 and 4167 and the link between 4172 and 4170 have been little used, with previously little used links dropping off of the network completely. These temporal processes with increased and decreased use of links reveal the plasticity effects of flexible systems.

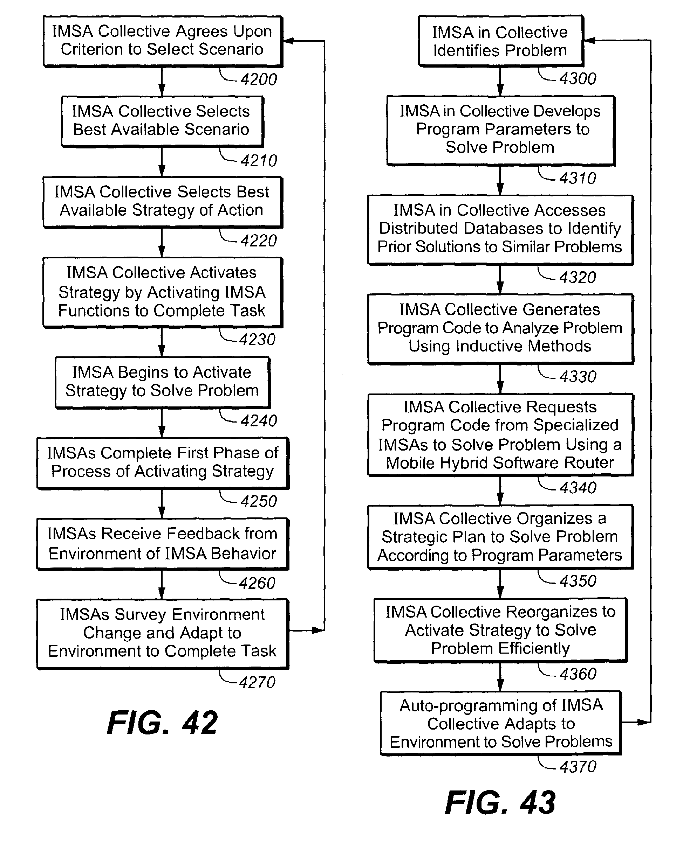

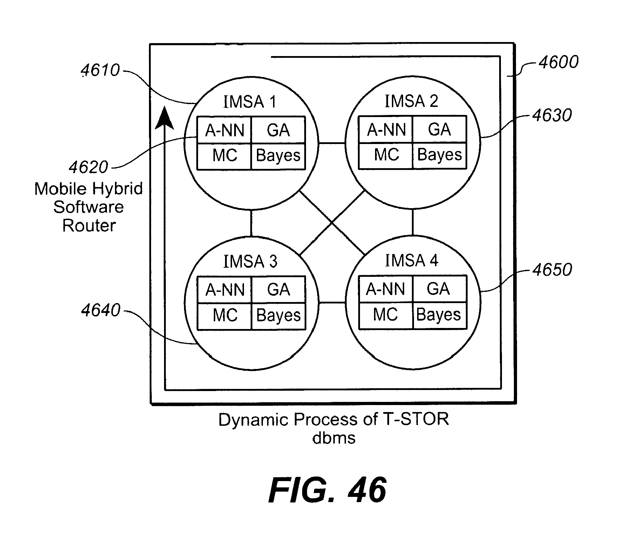

Figs. 42 to 45 lay out the phenomena of automated computer programming. The present system allows computers in networks to perform specific auto-programming functions. In particular, routine tasks use auto-programming techniques to self-organize and execute strategies and to align with and adapt to a changing external environment. The use of IMSA collectives, combined with the distributed T-STOR database management system (see below at fig. 46) and the mobile hybrid software router, allows automated programming. While the mobile hybrid software router combines simple algorithms and computational, AI and logical techniques to solve problems in real time, the implementation in a MAS allows far more functionality. In addition, the use of dynamic databases allows IMSA collectives to rapidly interact with changing external environments. The social characteristics of the present system allow it to divide functions in a distributed computer environment in order to solve problems that previous approaches to automated computer programming could not address.

Adaptation to change requires of complex computation systems the ability to autonomously evolve their program parameters. For this to be possible, the rule-parameters and meta-rules need to evolve. The present system provides techniques, methods and apparatus for these complex processes to occur. Sets of these techniques are provided within the functionality of collectives of IMSAs, allowing them to self-organize through the use of anticipation, strategic formation, scenario development and selection, coalition formation and group analysis, learning and decision-making processes. Automated programming processes involving IMSA collectives are discussed in figs. 42 to 45.

Fig. 42 lays out the semi-automated programming by IMSA groups. After an IMSA collective agrees upon criteria to select a scenario (4200), the collective selects the best available scenario (4210) and selects the best available strategy of action (4220). The IMSA collective then activates a strategy by activating IMSA functions to complete a task (4230), and IMSAs begin to activate a strategy to solve a problem (4240). Once the IMSAs complete the first phase of a process of activating a strategy (4250), they receive feedback from the environment regarding IMSA behavior (4260), survey the environmental change in order to adapt to the environment and complete the task (4270) and repeat the process.

Fig. 43 shows a problem-based automatic computing process for network optimization using IMSA groups. After an IMSA collective identifies a problem (4300) and develops program parameters to solve the problem (4310), the IMSA collective accesses distributed databases to identify prior solutions to similar problems (4320). The IMSA collective then generates program code to analyze the problem using inductive methods (including methods for comparison by analogy) and the IMSA collective requests program code from specialized IMSAs to solve the problem using a mobile hybrid software router (4340). The IMSA collective organizes a strategic plan to solve the problem according to program parameters (4350) and reorganizes in order to activate a strategy to solve the problem efficiently (4360). The process of IMSA collective auto-programming adapts to the environment to solve problems (4370), after which the process begins again.

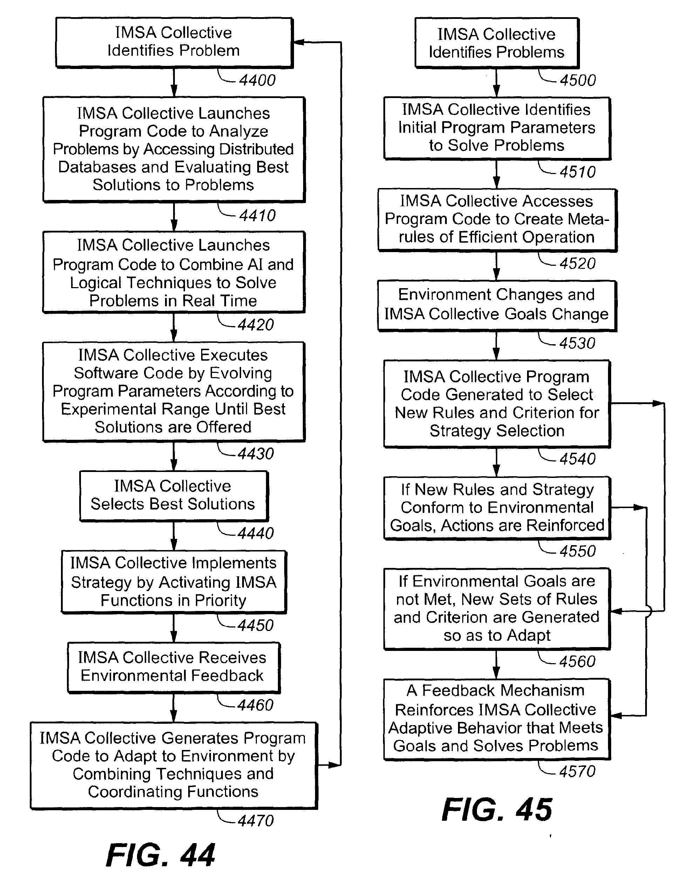

Fig. 44 shows automated problem solving by IMSA groups. After an IMSA collective identifies problems (4400), it launches program code to analyze the problems by accessing distributed databases and evaluating past solutions to problems (4410). The IMSA collective launches program code to combine computational, logical and AI techniques to solve problems in real time (4420) and executes software code by evolving and constantly adjusting program parameters within an experimental range until the best solutions are offered (4430). The IMSA collective then selects the best solutions (4440) and implements a strategy sequence by activating IMSA functions according to priority (4450). The IMSA collective receives environmental feedback (4460) and generates program code to adapt to the environment by combining computational, logical and AI techniques and by coordinating functions to perform specific tasks (4470), after which the process begins again.

Fig. 45 shows the process of autonomic computing in the self-regulating network of IMSA collectives. After an IMSA collective identifies problems (4500), the collective identifies initial program parameters to solve problems (4510) and accesses program code to create meta-rules of efficient operation (4520). Because the environment inevitably changes, the IMSA collective's goals change (4530). The IMSA collective then generates program code to select new rules and criteria for strategy selection (4540). At this juncture, new rules and strategy conform to environmental goals and actions are reinforced (4550), or, alternatively, if environmental goals are not met, a new set of rules and criteria is generated for adaptability (4560). In either event, a feedback mechanism reinforces IMSA collective adaptive behavior so that it meets the goals and solves the problems (4570).

Fig. 46 illustrates the application of IMSA collective behaviors to transformational spatio-temporal object relational (T-STOR) database management systems. Collectives of IMSAs interoperate within T-STOR databases, which are adaptive, dynamic and active vehicles for the processing of massive quantities of data sets and are optimized for interaction with changing environments. In this drawing, the T-STOR database (4600) has four interacting IMSAs (4610, 4630, 4640 and 4650). IMSAs have mobile hybrid software routers (4620) which combine computational and logical techniques in order to solve complex problems. The interaction process between the IMSAs and the T-STOR database produces a dynamic relationship.

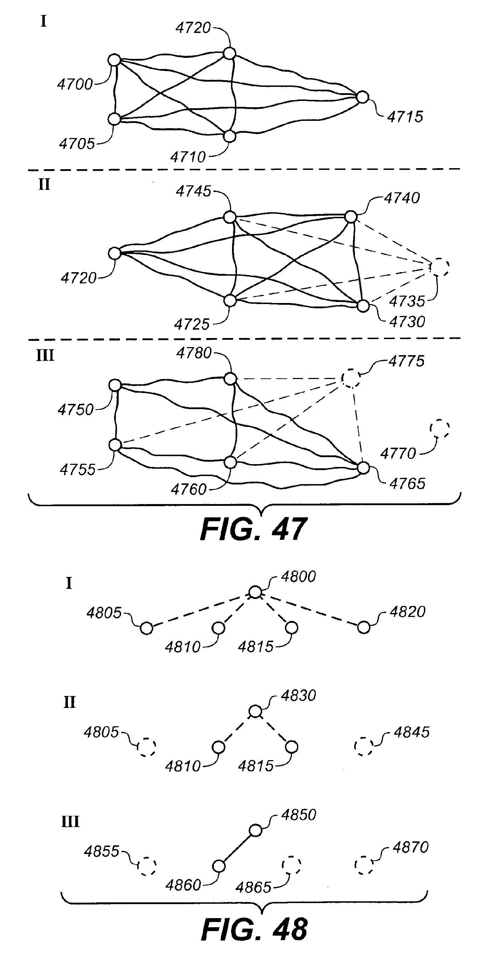

In order for the automated programming of IMSA collectives to be effective in computation and engineering systems, they must have external applications. The numerous complex system applications with which the present system may combine include economic networks, collective robotics, communications networks, bioinformatics systems and enterprise resource management systems. These are generally described in figs. 47 to 51.

Fig. 47 shows the application of IMSA collective behaviors to a dynamic distributed network. In phase I a primary configuration shows linking points at 4700, 4705, 4710, 4715 and 4720. At phase II some of this configuration is intact at 4725, 4730, 4740 and 4745. The links between 4730, 4735 and 4740 are weaker and in the process of being eliminated. Meanwhile, links are added between 4725, 4720 and 4745. Finally, at phase II, additional links are added between 4750 and 4755 and 4750 and 4780 while links between 4775 and 4780, between 4775 and 4760 and between 4775 and 4765 are weakened. The point at 4770 and its prior links are by now so weak as to lack visible connections. Using this process, facilitated by IMSA interactive processes, the network transforms to reinforce heavily use links and to weaken lesser used links.

Fig. 48 shows the application of IMSA collective behaviors to a commercial system for supply chain management. In phase I, a single IMSA (4800) issues requests for bids from four IMSAs (4805, 4810, 4815 and 4820). In phase II, the IMSA requesting the bids (4830) stops interacting with two IMSAs (4825 and 4845) while focusing its bidding interaction on two IMSAs (4835 and 4840). Finally, in phase III, the initiating IMSA (4850) focuses on negotiations with one other IMSA (4860), ceasing activity with other IMSAs, and ultimately selecting a product or service from this last IMSA. This multilateral multi-phasal negotiation process is used by customers of the supply chain to select products or services from vendors, basing their selections on multivariate qualities.

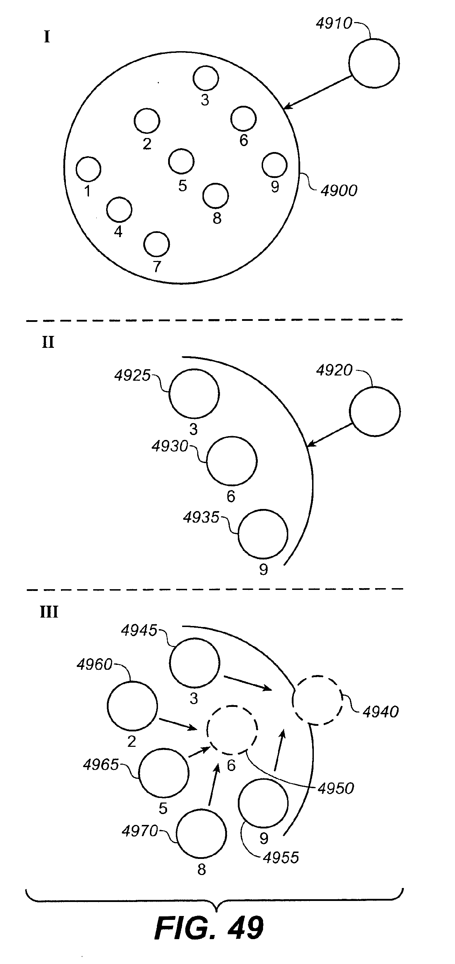

Fig. 49 shows the application of IMSA collective behaviors to collective robotics (CR) systems. At phase I, a group (4900) of mobile robots (1 through 9) that contain IMSAs are impinged upon by a foreign object (4910). As depicted in phase II, the grouped IMSAs (3, 6 and 9) at 4925, 4930 and 4935, respectively, appear at the location of the impact of the object (4920). In phase III, robot 6 (4950) is obliterated by the impacting object (4940), but other robots, at 4960, 4965 and 4970, move to attack the object and fill the space left by the loss of robot 6 (4950). This robotic system is decentralized and autonomous; it is programmed to perform self-organizing tasks and to interact with its environment. These collective processes, objectives and capabilities are only possible when the robots are regulated by IMSAs.

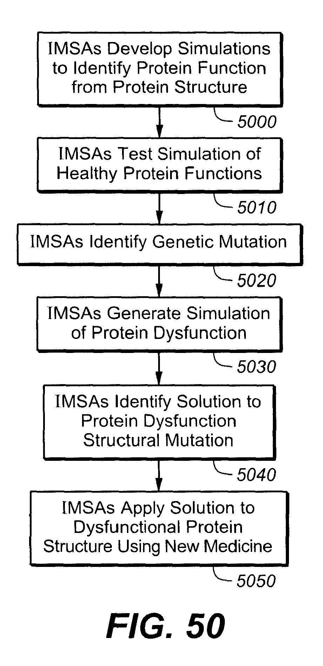

Fig. 50 demonstrates the application of IMSA collective behaviors to a bioinformatics system. After IMSAs develop simulations to identify protein function based on protein structure (5000), they test the simulation of healthy functions (5010). The IMSAs then identify genetic mutations (5020) and generate simulations of protein dysfunction (5030). The IMSAs identify a solution to the problem of protein dysfunction structural mutation (5040) and apply a solution using new medicine (5050) tailored to each specific dysfunctional protein structure problem.

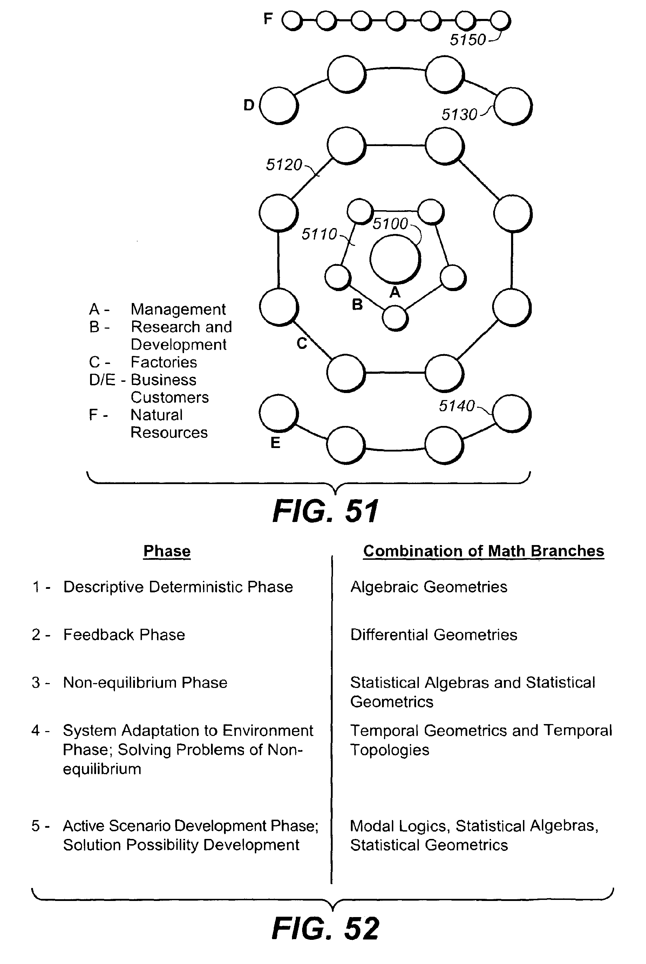

Fig. 51 displays the application of IMSA collective behaviors to a global enterprise resource management system. Management headquarters (5100) appears at the center of a ring of corporate departments which include R&D labs (5110), factories (5120), business customers (5130 and 5140) and natural resources (5150). IMSAs are contained and used in each part of this dynamic system to organize, prioritize, synchronize, anticipate and execute strategies for optimum business functioning. When an unexpected surprise, such as a natural disaster, interrupts the supply chain, the enterprise resource management system that uses the IMSA collectives instantaneously adapts to the problem and reroutes the system to maximize productivity.

One key aspect of the present system involves the temporal dynamics of processes. In order to describe these temporal dynamics, it is necessary to develop and apply specific logical and mathematical fields. Modal logic, which involves developing possible eventualities from specific assumptions and counterfactuals, is an example of a useful logic for describing temporal events. Temporal logic, which maps the temporal components of possible and probable event streams, is also useful in describing temporal events in ergodic systems. Temporal logic is typically organized to apply to specific event streams and is well suited for processing in computational environments. However, the application of temporal logic to collectives is especially important because different pathways and vectors may be mapped, contingent on the outcomes of other IMSAs moves. This novel *collective* temporal logic is useful in the modeling of game theoretic simulations and scenarios contained in the prevent system.

Just as temporal and modal logics are useful for describing computation possibilities, temporal geometries and topologies are useful for describing the extensible and manifold spatio-temporal aspects of specific applications to which the present invention refers, including collective robotics systems. Temporal algebraic geometries, temporal differential geometries, temporal combinatorial topologies and temporal combinatorial geometries are valuable tools to help describe dynamic engineering systems. A novel field of temporal *integral* geometry involves working backward from a spatio-temporal result to understand the multivariate sources that probabilistically make possible specific outcomes. Multi-agent systems use this new field of mathematics to analyze possible scenarios and thereby evaluate and select the best available scenario for action at each phase. Temporal integral geometry is a tool that combines with Bayesian learning and Monte Carlo probabilities simulation and provides critical evidence of prior experiences with which the optimum performance of evolving systems may be calculated.

Multiple categories of mathematics and logic are involved in the description of complex dynamic systems. From the viewpoint of an IMSA collective, the main phases are the deterministic phase, the feedback stage, the non-equilibrium phase, the system adaptation phase and the scenario development phase. Different math and logic categories are involved in describing each of these phases. Any particular logic or math category will cease to be optimum in describing a specific phase in the dynamic system process as another math or logic category becomes more suited to such description.

In addition, specific combinations of math or logic fields may best describe a specific phase of the process. Overall, then, it is possible to construct a multi-category system of combinatorial active modeling which optimally organizes each particular math or logic category, and its combinations, to solve specific problems in the complex dynamic system. A general phenomenology of active events produced by groups of independent agents, which the present system embodies, requires a combinatorial multi-category math and logic system of active modeling.

Fig. 52 shows dynamical system phases matched to unique combinations of mathematical branches. First, the descriptive determinate phase corresponds to algebraic geometries. Second, the non-equilibrium phase corresponds to statistical algebras and statistical geometries. Third, the phase that adapts to the environment by solving non-equilibrium problems corresponds to temporal geometries and temporal topologies. Finally, the phase that actively develops scenarios to provide possible scenario solutions corresponds to modal logics, statistical algebras and statistical geometries. Each of these mathematics models is optimized for each respective system process phase. When a specific system phase moves to a transitionary state, the capacity to use a corresponding mathematics or logical model becomes suboptimal; contrarily, when a system phase moves to another level, a new mathematics or logical model becomes increasingly optimal to describe behavior for that level.

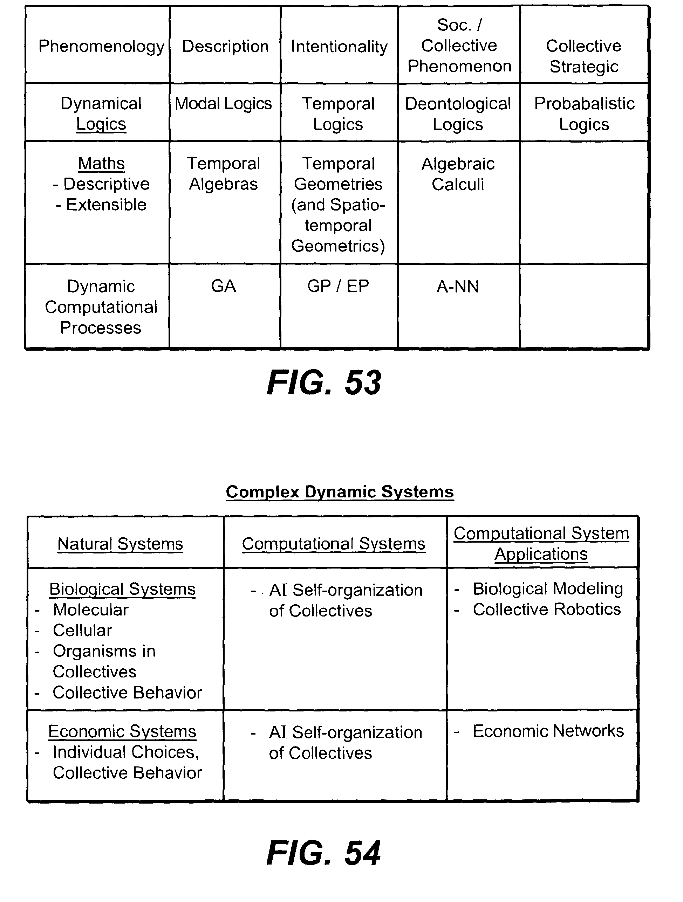

Fig. 53 portrays a unified philosophical framework for dynamic systems. At the top level is phenomenology, a system for explaining different levels of system organization. Dynamical logics are used at the next level, mathematics at the third level and dynamic computational processes are at the bottom level. At the phenomenological level, description, intentionality, social (collective) phenomena and collective strategic behavior are organized. At the dynamic logical level, modal logics, temporal logics, deontological logics and probabilistic logics, respectively, are organized. At the mathematical level, temporal algebras, temporal (and spatio-temporal) geometries and topologies, and algebraic calculi are organized. Finally, at the dynamic computational process level, genetic algorithms, genetic and evolutionary programs and artificial neural networks are organized. At each level, a corresponding category describes different phenomena.

Fig. 54 offers complex dynamic system examples and their corresponding representational domains. In the left column are specified natural systems, biosystems and economic systems and mathematics and phenomenological domains. In the case of natural systems, computational systems and computational system applications describe and organize these systems. In the case of biosystems (whether molecular, cellular or organismal) wherein collective behaviors are involved, or the case of economic systems, in which individual choices comprise collective behaviors, AI organization and self-organization processes order collectives. Economic networks, biological modeling and collective robotic systems provide applications of these systems.

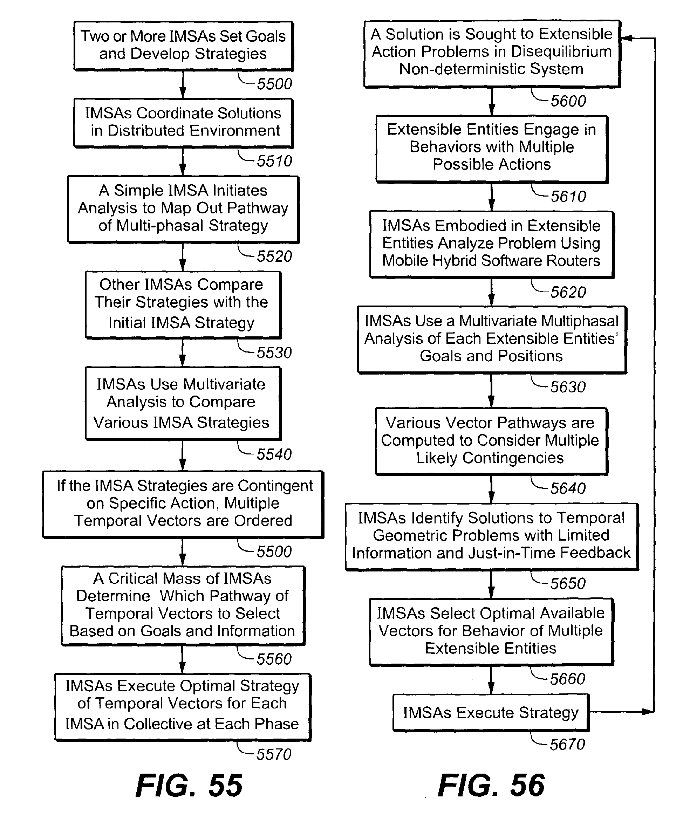

Fig. 55 shows collective temporal logic. After two or more IMSAs set goals and develop strategies (5500), the IMSAs coordinate solutions in a distributed environment (5510), and a single IMSA initiates an analysis to map out the pathway of multi-phasal strategy (5520). Other IMSAs compare their strategies with the initial IMSA strategy (5530), and IMSAs use multivariate analysis to compare various IMSA strategies (5540). If the IMSA strategies are contingent on specific action, multiple temporal vectors are ordered (5550), and a critical mass of IMSAs determines which pathway of temporal vectors to select, based on goals and information (5560). IMSAs then execute an optimal strategy of temporal vectors for each IMSA in the collective at each phase of the process (5570).

Fig. 56 shows temporal algebraic geometry. After a solution is sought to extensible action problems in a disequilibrium non-deterministic system (5600), extensible entities engage in behaviors with multiple possible actions (5610), and IMSAs embodied in extensible entities analyze the problem using mobile hybrid software routers (5620). IMSAs use a multivariate multi-phasal analysis of each extensible entity's goals and positions (5630), and various vector pathways are computed to consider multiple likely contingencies (5640). IMSAs identify solutions to temporal geometric problems with limited information and Just-in-Time feedback (5650), and the IMSAs select optimal available vectors for behavior of multiple extensible entities (5660). IMSAs then execute a strategy (5670) based on the selected solutions and may repeat the process.

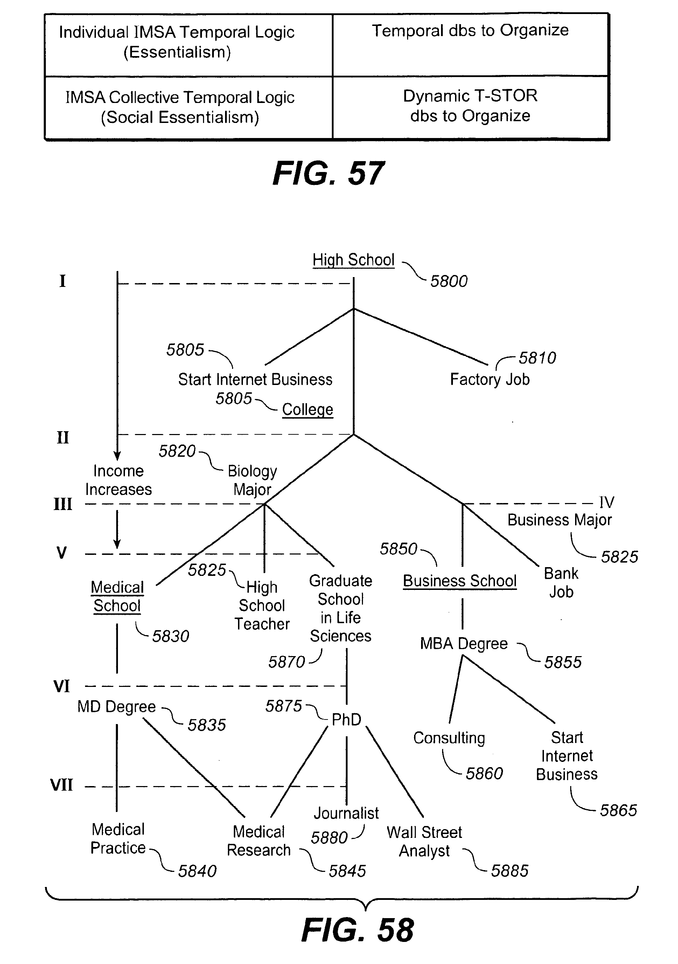

Fig. 57 illustrates the phase transitions of different temporal logics. Individual IMSA temporal logic (essentialism) corresponds to temporal databases. Collective IMSA temporal logic corresponds to dynamic T-STOR databases.

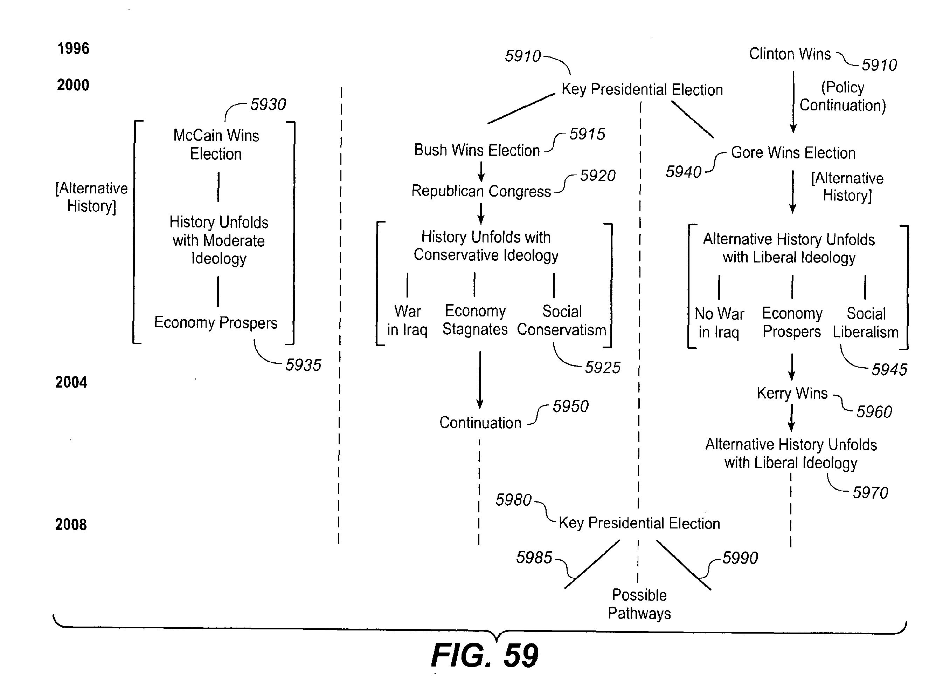

Figs. 58 and 59 describe the temporal vectors of specific recognizable situations, presented to analogize the present system. In the case of an individual, specific alternative choices are available in school, which make various career options possible. With feedback in the system to allow for aptitude and interest, the opportunities allow an individual to map out a course of study and a career. Analogously with an IMSA, various options are available, including scenarios with a temporal component, a goal-setting component and an action (or strategy execution) component.

Fig. 58 shows individual choices in temporal pathways. In this example, the possible educational pathways are considered from high school (5800) and college (5815) to graduate school options and careers. From high school, the individual may start an Internet business (5805) or get a factory job (5810) or go to college to study either biology (5820) or business (5825). If the individual studies business in college, he or she may obtain a bank job (5852) or go on to business school to obtain an MBA degree (5855). If the student completes an MBA degree, he or she may get a consulting job (5860) or start an Internet business (5865). If the individual were to get a biology degree in college (5820), he or she may become a high school teacher (5825), go on to medical school (5830) to get an MD degree (5835) or go to graduate school in life sciences (5870) to get a PH.D. degree (5875). If the individual obtains an MD degree, he or she may practice medicine (5840) or conduct medical research (5845). If the person obtains a PH.D. degree, he or she may conduct medical research (5845) and become a journalist (5880) or a Wall Street analyst (5885). These example career paths are exemplary of possible worlds that may by extension be used to describe IMSA behaviors. At each stage, there are contingent thresholds that allow the future development of each respective phase. An individual IMSA is analogized to an individual's progress because an IMSA emulates specialized behaviors.

Social history may also be described with a modal logic representation of possible pathways and vectors of ideological and institutional change, as exemplified in fig. 59's example, below, of the sequence of U.S. presidential elections. The choice between presidential candidates represents a quantitative manifestation of the electorate's acceptance of a particular ideology. These ideological choices are manifest in history as the policy choices of the president adapt to congressional ideology. Thus, social history may be analogously compared to the social component of IMSA collectives which self-organize and auto-program to solve problems and achieve goals.

Fig. 59 treats bipartisan U.S. presidential eventualities. These socio-political eventualities are analogized to collectives of IMSAs because the progress of these social situations are correlated to the social behaviors of IMSA groups and their possible scenario development. After Clinton wins reelection in 1996 (5900), he realizes the actualization of policy continuation from his first term. However, in a key presidential election (5910) in 2000, Bush wins election (5915) and, combined with a Republican Congress (e.g., House of Representatives), implements a conservative ideology (5925) in the international, economic and social arenas. However, if McCain (5930) won the election in an alternative historical vector, also with a Republican Congress, history might have unfolded according to a more moderate ideology (5935). While the war in Iraq might have occurred under McCain's watch, the economy might have performed differently, and there might have been more moderate social conservatism. On the other hand, had Gore won the election (5940), there would have most likely been a continuation of the Clinton policies (5945). Similarly, if Kerry had won the election in 2004 (5960), an alternative history would have transpired with policies similar to Clinton's (5970). However, since Bush won reelection (5950), the policies from his first administration continue. In 2008, the U.S. will experience another key presidential election with possible pathways that are either generally Republican (5985) or Democrat (5990). These possible scenarios are intended to show by analogy scenarios for groups of IMSAs as they navigate contingent possibilities in order to conduct specific behaviors.

It is understood that the examples and embodiments described herein are for illustrative purposes only and that various modifications or changes in light thereof will be suggested to persons skilled in the art and are to be included within the spirit and purview of this application and scope of the appended claims. All publications, patents, and patent applications cited herein are hereby incorporated by reference for all purposes in their entirety.

## Claims

1. A dynamic system for complex behaviors of collectives of intelligent mobile software agents having a plurality of system layers interconnected to one another, comprising:
a first layer including a computer and communications network;
a second layer including intelligent mobile software agents in a multi-agent system;
a third layer including multi-functional intelligent mobile software agents;
a fourth layer including intelligent mobile software agent analytical methods;
a fifth layer including intelligent mobile software agent group learning processes;
a sixth layer including intelligent mobile software agent active simulation modeling;
a seventh layer including intelligent mobile software agent group scenario generation processes;
an eighth layer including intelligent mobile software agent group decision-making processes;
a ninth layer including intelligent mobile software agent aggregation and re-aggregation processes;
a tenth layer including intelligent mobile software agent team competition and coalition formation processes;
an eleventh layer including active network plasticity;
a twelfth layer including automated computer programming in a multi-agent system; and
a thirteenth layer including functional applications, including collective robotics systems, automated commerce systems, communications network management systems, enterprise resource management systems and bioinformatics systems.

2. a method as claimed in any preceding claim, in which the behavior of groups of intelligent mobile software agents is organized to learn.

3. a method as claimed in any preceding claim, in which the intelligent mobile software agents organize active simulations.

4. a method as claimed in any preceding claim, in which intelligent mobile software agents generate scenarios of possible behaviors and make a decision based on an optimal scenario.

5. a method as claimed in any preceding claim, in which intelligent mobile software agents in a collective initiate aggregation processes and re-aggregation processes to organize the collective.

6. a method as claimed in any preceding claim, in which teams of intelligent mobile software agents are organized to compete with other teams of intelligent mobile software agents.

7. a method as claimed in any preceding claim, in which collectives of intelligent mobile software agents continuously evolve coalitions.

8. a method as claimed in any preceding claim, in which collectives of intelligent mobile software agents are organized to achieve adaptive network plasticity behaviors.

9. a method as claimed in any preceding claim, in which the collective behavior of intelligent mobile software agents displays automated programming.

10. a method as claimed in any preceding claim, in which an application includes:
collective robotics systems;
automated commercial systems, including commercial trading networks for supply chain management solutions;
communications network systems;
enterprise resource management systems or;
bioinformatics systems, including structural proteomics, functional proteomics and personalized solutions modeling.
